# EUROPEAN PATENT APPLICATION

(11) **EP 2 426 016 A1**
(43) Date of publication of application: **07.03.2012**
(21) Application number: 10769755.9
(22) Date of filing: 27.04.2010
(51) Int. Cl.: B60R 21/264, B01J 7/00, C06B 45/36, C06D 5/00

(54) **GAS GENERATOR**

(30) Priority: 30.04.2009 JP 2009110733; 30.04.2009 JP 2009110734; 13.01.2010 JP 2010004783
(71) Applicant: Nippon Kayaku Kabushiki Kaisha, Tokyo 102-8172 (JP)
(72) Inventor: HAGIHARA, Daisuke, Himeji-shi Hyogo 679-2123 (JP); ENAMI, Koichi, Himeji-shi Hyogo 679-2123 (JP); NAKAMURA, Kouichi, Himeji-shi Hyogo 679-2123 (JP); SASAMOTO, Koichi, Himeji-shi Hyogo 679-2123 (JP)
(74) Representative: TBK
(86) International application number: PCT/JP2010/057492
(87) International publication number: WO 2010/126057

(57) **Abstract**

A cylinder-shaped gas generator (1A) includes an elongated and circular cylindrical housing, a working gas generation chamber and a filter chamber provided within the housing, and an igniter (30). The working gas generation chamber mainly contains a dividing member (50) and a granular gas generating agent (62). The dividing member (50) has a circular cylindrical portion (52), a bottom portion (53) and a hollow portion (55). The granular gas generating agent (62) is stored in the portion of the working gas generation chamber excluding the hollow portion (55). The bottom portion (53) of the dividing member (50) is configured to have a tapered shape such that its outer shape is reduced in size in accordance with a decrease in the distance from the igniter (30).

## Description

### TECHNICAL FIELD

The present invention relates to a gas generator incorporated in an air bag apparatus as a vehicle occupant protection apparatus mounted on an automobile or the like, and more particularly to a so-called cylinder-shaped gas generator having an elongated cylindrical outer shape.

### BACKGROUND ART

Conventionally, an air bag apparatus serving as a vehicle occupant protection apparatus is widely used in view of protection of occupants of automobiles or the like. The air bag apparatus is provided in the vehicle or the like for the purpose of protecting vehicle occupants from shock caused by crash of vehicles or the like. The air bag is instantaneously inflated and expanded at the time of crash of a vehicle or the like to receive the body of a vehicle occupant by the expanded air bag. The gas generator serves as equipment incorporated in this air bag apparatus to instantaneously generate gas at the time of crash of vehicles or the like for inflating and expanding the air bag.

There are some gas generators variously configured based on the specifications such as an installation position and an output for the vehicle or the like. There is a gas generator having a structure referred to as "cylinder-shaped". The cylinder-shaped gas generator has an outer shape of an elongated cylinder and is suitably incorporated in a side air bag apparatus, an air bag apparatus for the passenger seat, a curtain air bag apparatus, a knee air bag apparatus, and the like. In addition to this cylinder-shaped gas generator, the gas generator having an elongated cylindrical outer shape may include a so-called T-shaped gas generator, and the like.

The specific structure of the cylinder-shaped gas generator as described above is disclosed, for example, in Japanese Patent Laying-Open No. 2005-313812 (Patent Literature 1), Japanese Patent Laying-Open No. 11-78766 (Patent Literature 2), Japanese Patent Laying-Open No. 2002-166818 (Patent Literature 3) and the like. In the cylinder-shaped gas generator disclosed in these literatures, an elongated cylindrical housing is provided at its one end in the axial direction with an igniter and an enhancer agent, at its approximately middle portion in the axial direction with a working gas generation chamber storing a gas generating agent which is burnt to generate working gas, and at its other end in the axial direction with a filter chamber housing a filter and also with a gas discharge opening.

In the cylinder-shaped gas generator having the above-described configuration, the flame generated by actuation of the igniter is transferred to the gas generating agent by combustion of the enhancer agent. This causes combustion of the gas generating agent, thereby leading to generation of working gas of high temperature and high pressure in the working gas generation chamber. The generated working gas flows in the axial direction of the housing from the working gas generation chamber into the filter chamber. The working gas then flows through the filter and is discharged through the gas discharge opening to the outside of the housing. The working gas discharged through the gas discharge opening is subsequently used for inflating and expanding the air bag.

Specifically, Japanese Patent Laying-Open No. 2002-166818 discloses a cylinder-shaped gas generator in which a cylindrical dividing member having a bottom is disposed in the working gas generation chamber (particularly, Japanese Patent Laying-Open No. 2002-166818). The cylinder-shaped gas generator having a dividing member disposed in the working gas generation chamber can be configured such that the space within a housing is divided into a working gas generation chamber and a filter chamber, and the working gas generation chamber is provided therein with a hollow space disposed coaxially with the housing. This causes the gas from the gas generating agent to flow into this hollow space and to be discharged therefrom continuously. Consequently, the apparatus can be decreased in size while the air bag can be gradually inflated and expanded.

### CITATION LIST

### PATENT LITERATURE

PTL 1: Japanese Patent Laying-Open No. 2005-313812
PTL 2: Japanese Patent Laying-Open No. 11-78766
PTL 3: Japanese Patent Laying-Open No. 2002-166818

### SUMMARY OF INVENTION

### TECHNICAL PROBLEM

In the cylinder-shaped gas generator, there is a strong demand to improve the mountability on a vehicle and the like, which causes an important task to achieve reduction in size and weight of the gas generator. Accordingly, in recent years, attempts have been made to replace, with compact and lightweight components, relatively heavy components such as a housing and a filter used as main components in the cylinder-shaped gas generator. Specifically, an attempt is now being made to change the material forming a housing used as a component having a strength from the material made of conventionally-used stainless steel, steel or the like to a press-molded product having a small diameter and made of a rolled steel plate typified by SPCC, SPCD and SPCE or to a molded product made of an electric resistance welded tube typified by STKM.

Recently, a non-azide based gas generating agent is widely used as a gas generating agent used for a gas generator. In the case where this non-azide based gas generating agent is used, the working gas to be produced is relatively low in temperature, which is advantageous in that this working gas can be suitably utilized for the air bag apparatus. However, there may be problems that the ignition performance is deteriorated as compared with the case where a gas generating agent of different compositions is used and that the gas generating agent should be in a high-pressure environment in order to burn the agent with stability. Accordingly, the above-described problems should be taken into consideration in order to decrease the size and weight of the housing of the cylinder-shaped gas generator.

Furthermore, when the housing of the cylinder-shaped gas generator is configured to have a reduced diameter, the produced working gas is contained within the working gas generation chamber, which causes a tendency to lengthen the time period that elapses before the working gas is started to be discharged from the gas discharge opening. This is because the unburned gas generating agent and the burning gas generating agent itself each act as a resistance against the flow of the produced working gas. Accordingly, in the case where the housing of the cylinder-shaped gas generator is merely configured to have a reduced diameter, the internal pressure in the working gas generation chamber rises sharply in the early stage of actuation. This makes it difficult to satisfy the required output characteristics, and particularly, causes a problem that it is difficult to apply this cylinder-shaped gas generator to a side air bag apparatus and a curtain air bag apparatus that should be operated at high speed in the early stage of actuation.

Furthermore, in the cylinder-shaped gas generator, the housing should be configured to have a pressure resistance such that it can sufficiently resist an increased internal pressure within the working gas generation chamber resulting from production of the working gas by combustion of the gas generating agent. In the case where a housing having a reduced diameter is formed by press-molding a member of high strength such as a high-tensile steel plate in order to provide the housing with such a pressure resistance performance, the housing can be configured to sufficiently resist the increased internal pressure within the working gas generation chamber. However, the housing suffers remarkable residual stress during presswork. This makes it difficult to provide the housing with a sufficient strength, particularly, in the low temperature environment. In order to solve this problem, it is necessary to perform a process such as annealing. However, when such an annealing process is performed, it is not possible to maintain the pressure resistance performance that can resist the increased internal pressure in the working gas generation chamber as described above. Therefore, in order to ensure the strength under the low temperature environment and also ensure the pressure resistance performance at the time of actuation, it is consequently necessary to increase the thickness of the housing to an appreciable extent, which causes problems that moldability is deteriorated and the weight is increased. Thus, the significance of reducing the diameter will be rendered meaningless.

In contrast, in the case where the housing is formed of a press-molded product having a reduced diameter and made of a rolled steel plate as described above, a molded product made of an electric resistance welded tube, or the like, the housing can be configured to have a sufficient strength in the low temperature environment. However, it becomes difficult to provide the housing with a pressure resistance that can resist an increased internal pressure in the working gas generation chamber as described above.

In this way, in order to achieve reduction in size and weight (particularly, reduction in diameter and weight) of the cylinder-shaped gas generator, it is necessary to satisfy all of the conditions including that the working gas generation chamber should be maintained in a high pressure environment suitable for combustion of the gas generating agent during operation; the produced working gas should be prevented from being contained within the working gas generation chamber to thereby allow an increase in the operation speed in the early stage; the housing should be provided with sufficient pressure resistance and sufficient strength in the low temperature environment; and the like, which are, however, extremely difficult to be implemented.

Furthermore, in order to allow reduction in size and weight of the cylinder-shaped gas generator, in addition to the above-described points, it is necessary to conduct a study to implement the apparatus configuration so as to achieve desired output characteristics with stability. Generally, gas generating agents are molded as granular small pellets. It is practically impossible to fill the working gas generation chamber with these granular gas generating agents while separately adjusting the position and the direction in which each of these gas generating agents is arranged. Accordingly, these granular gas generating agents may often be randomly filled in the working gas generation chamber without any adjustment of the position and the direction in which these gas generating agents are arranged.

However, the working gas generation chamber is filled with granular gas generating agents at random, which may cause variations in the density of the gas generating agents in the working gas generation chamber. The variations in the density of the gas generating agents may significantly influence the output characteristics of the cylinder-shaped gas generator, which results in significant variations in the output characteristics among the finished products. In the case of the cylinder-shaped gas generator that is not sufficiently reduced in size, the working gas generation chamber storing the gas generating agents can be configured to have a relatively large volume. Accordingly, it is less likely to cause the above-described problem of density variations in the gas generating agents. However, in the cylinder-shaped gas generator that is reduced in size, the working gas generation chamber is inevitably reduced in volume. Therefore, the variations in the density of the gas generating agents lead to a serious problem.

The variations in the density of the gas generating agents can also cause a serious problem, without exception, in the cylinder-shaped gas generator having a configuration as disclosed in the above-described Japanese Patent Laying-Open No. 2002-166818. When the cylinder-shaped gas generator having a configuration as disclosed in Japanese Patent Laying-Open No. 2002-166818 is employed, a dividing member is disposed in the working gas generation chamber to allow excellent output characteristics to be achieved. However, the output characteristics may undergo significant variations depending on the filling state of the gas generating agents.

Therefore, the present invention has been made to solve the above-described problems, and an object of the present invention is to provide a gas generator that is reduced in size and weight while allowing desired output characteristics to be achieved with stability.

### SOLUTION TO PROBLEM

The gas generator according to the present invention includes a housing, ignition means, a partition member, and a dividing member. The housing is made of an elongated and circular cylindrical member closed at each end in an axial direction, and includes a working gas generation chamber in which a gas generating agent is burned to produce working gas, and a filter chamber housing a filter through which the working gas produced in the working gas generation chamber passes. The ignition means generates a flame for burning the gas generating agent and is disposed at one end in the axial direction of the housing. The partition member is located within the housing and partitions a space within the housing in the axial direction into the working gas generation chamber and the filter chamber. The dividing member is located within the working gas generation chamber and divides the working gas generation chamber. The filter chamber is located closer to an other end in the axial direction of the housing than the working gas generation chamber. A portion of a circumferential wall portion of the housing defining the filter chamber is provided with a plurality of gas discharge openings for discharging the working gas having passed through the filter to outside. The dividing member is made of a cylindrical member with a bottom having a hollow portion therein and disposed coaxially with the housing. The dividing member includes a cylindrical portion extending in the axial direction of the housing from an end of the partition member on a side of the working gas generation chamber, and a bottom portion closing an end of the cylindrical portion on a side of the ignition means. The bottom portion of the dividing member is located closer to the partition member than an end of the working gas generation chamber on the side of the ignition means. The gas generating agent is stored in a portion of the working gas generation chamber excluding the hollow portion of the dividing member. The cylindrical portion of the dividing member is provided with a plurality of first communication holes providing communication between a space in the working gas generation chamber storing the gas generating agent and the hollow portion of the dividing member. The partition member has a center portion provided with a second communication hole for providing communication between the hollow portion of the dividing member and the filter chamber. In this case, the bottom portion of the dividing member has a tapered shape to provide an outer shape gradually reduced in size in accordance with a decrease in a distance from the ignition means.

In the gas generator according to the present invention as described above, it is preferable that an outer surface of the bottom portion of the dividing member has an approximately hemispherical shape.

In the gas generator according to the present invention as described above, an outer surface of the bottom portion of the dividing member may have an approximately conical shape.

In the gas generator according to the present invention as described above, it is preferable that the cylindrical portion of the dividing member has a circular cylindrical portion having an inner diameter and an outer diameter that are constant in the axial direction of the housing. In this case, it is preferable that the above-described plurality of first communication holes are provided in the circular cylindrical portion of the dividing member.

In the gas generator according to the present invention as described above, the cylindrical portion of the dividing member may further include a diameter increasing portion continuously extending from an end of the circular cylindrical portion on the side of the partition member and gradually increasing in diameter in accordance with a decrease in a distance from the partition member.

In the gas generator according to the present invention as described above, the housing includes a first housing member having an elongated and circular cylindrical shape with a bottom and forming the other end and the circumferential wall portion of the housing, and a second housing member (squib holder) closing an open end of the first housing member to form the one end of the housing. In this case, it is preferable that the first housing member is made of a molded product obtained by performing a process for closing one of axial ends of an electric resistance welded tube. In the configuration as described above, it is preferable that an outer diameter R1 of the first housing member satisfies a condition of 15 mm ≤ R1 ≤ 22 mm; a distance L1 from a boundary portion between the bottom portion and the cylindrical portion in the dividing member to an end of the bottom portion of the dividing member on the side of the ignition means satisfies a condition of 1 mm ≤ L1 ≤ 7 mm; a distance L2 from the end of the bottom portion of the dividing member on the side of the ignition means to the end of the working gas generation chamber on the side of the ignition means and a diameter R2 of the working gas generation chamber satisfy a condition of 0.026 ≤ L2/R2 ≤ 0.71; and a diameter R3 of the hollow portion of the dividing member and diameter R2 of the working gas generation chamber satisfy a condition of 0.28 ≤ R3/R2 ≤ 0.54.

In the gas generator according to the present invention as described above, it is preferable that the gas generating agent contains a guanidine-based compound as a fuel and basic copper nitrate as an oxidant.

It is preferable that the gas generator according to the present invention as described above further includes a crush preventing member for preventing the gas generating agent from being crushed by vibration, and a first airtight container located within the housing and having a storage space airtightly enclosed therein. In this case, it is preferable that the gas generating agent, the dividing member and the crush preventing member are stored in the storage space of the first airtight container.

The gas generator according to the present invention as described above may further include a second airtight container located within the housing and having a storage space airtightly enclosed therein. In this case, it is preferable that the ignition means includes an igniter containing an ignition charge burning to generate a flame and an enhancer agent for transmitting the flame generated by the igniter to the gas generating agent. It is preferable that the enhancer agent is stored in the storage space of the second airtight container.

In the gas generator according to the present invention as described above, it is preferable that the filter includes a hollow communication portion extending in the axial direction of the housing. It is also preferable that the hollow communication portion at least reaches an end face of the filter on the side of the working gas generation chamber. In this case, it is preferable that the partition member includes an annular plate portion covering the end face of the filter and a cylindrical protruding portion continuously extending from an inner circumferential edge of the annular plate portion toward into the hollow communication portion of the filter to cover an inner circumferential surface of the filter on a side of the end face. It is also preferable that the second communication hole is defined by an inner circumferential surface of the cylindrical protruding portion of the partition member. In this case, it is preferable that the cylindrical protruding portion of the partition member is gradually decreased in diameter such that an opening area of the second communication hole is decreased in accordance with an increase in a distance from the annular plate portion of the partition member.

In the gas generator according to the present invention as described above, it is preferable that the filter includes a hollow communication portion extending in the axial direction of the housing. It is also preferable that the hollow communication portion at least reaches an end face of the filter on the side of the working gas generation chamber. In this case, it is preferable that the partition member includes an annular plate portion covering the end face of the filter and a cylindrical protruding portion continuously extending from an inner circumferential edge of the annular plate portion toward into the hollow communication portion of the filter to cover an inner circumferential surface of the filter on a side of the end face. It is also preferable that the second communication hole is defined by an inner circumferential surface of the cylindrical protruding portion of the partition member. In this case, it is preferable that the cylindrical protruding portion of the partition member is gradually increased in diameter such that an opening area of the second communication hole is increased in accordance with an increase in a distance from the annular plate portion of the partition member.

In the gas generator according to the present invention as described above, it is preferable that the first housing member is equal in outer diameter to the second housing member.

### ADVANTAGEOUS EFFECTS OF INVENTION

According to the present invention, a gas generator can be provided that is reduced in size and weight while achieving desired output characteristics with stability.

### BRIEF DESCRIPTION OF DRAWINGS

Fig. 1A is a front view of a cylinder-shaped gas generator in the first embodiment of the present invention.
Fig. 1B is a right side view of the cylinder-shaped gas generator in the first embodiment of the present invention.
Fig. 2 is a schematic cross-sectional view of the cylinder-shaped gas generator in the first embodiment of the present invention.
Fig. 3A is a schematic cross-sectional view showing a filling and sealing process of the gas generating agent when manufacturing the cylinder-shaped gas generator in the first embodiment of the present invention.
Fig. 3B is a schematic cross-sectional view showing a filling and sealing process of the gas generating agent when manufacturing the cylinder-shaped gas generator in the first embodiment of the present invention.
Fig. 3C is a schematic cross-sectional view showing a filling and sealing process of the gas generating agent when manufacturing the cylinder-shaped gas generator in the first embodiment of the present invention.
Fig. 4A is a main-part enlarged cross-sectional view showing an enlarged portion in the vicinity where a partition member of the cylinder-shaped gas generator in the first embodiment of the present invention is disposed and also showing the state immediately after the start of actuation of the cylinder-shaped gas generator.
Fig. 4B is a main-part enlarged cross-sectional view showing an enlarged portion in the vicinity where a partition member of the cylinder-shaped gas generator in the first embodiment of the present invention is disposed and also showing the state after a lapse of a prescribed time period from the start of actuation of the cylinder-shaped gas generator.
Fig. 5 is a schematic cross-sectional view showing the configuration of the cylinder-shaped gas generator according to the example used in the verification test.
Fig. 6 is a schematic cross-sectional view showing the configuration of the cylinder-shaped gas generator according to a comparative example used in the verification test.
Fig. 7 is a graph for illustrating various parameters measured in the verification test.
Fig. 8 is a table showing the test results of the verification test.
Fig. 9 is a graph showing the test results of the verification test and also showing variations in tank pressure at 10 ms.
Fig. 10 is graph showing the test results of the verification test and also showing variations in the maximum value of the tank pressure.
Fig. 11 is a graph showing the test results of the verification test and also showing variations in time at which the tank pressure reaches the maximum value.
Fig. 12 is a graph showing the test results of the verification test and also showing variations in the maximum value of the internal pressures observed in the working gas generation chamber.
Fig. 13 is a schematic cross-sectional view of the cylinder-shaped gas generator in the second embodiment of the present invention.
Fig. 14 is a schematic cross-sectional view of the cylinder-shaped gas generator in the third embodiment of the present invention.
Fig. 15 is a schematic cross-sectional view of the cylinder-shaped gas generator in the fourth embodiment of the present invention.
Fig. 16A is a main-part enlarged cross-sectional view showing an enlarged portion in the vicinity where a partition member of the cylinder-shaped gas generator in the fourth embodiment of the present invention is disposed and also showing the state immediately after the start of actuation of the cylinder-shaped gas generator.
Fig. 16B is a main-part enlarged cross-sectional view showing an enlarged portion in the vicinity where a partition member of the cylinder-shaped gas generator in the fourth embodiment of the present invention is disposed and also showing the state after a lapse of a prescribed time period from the start of actuation of the cylinder-shaped gas generator.
Fig. 17A is a main-part enlarged front view showing an enlarged portion in the vicinity where a gas discharge opening of a cylinder-shaped gas generator in the fifth embodiment of the present invention is disposed.
Fig. 17B is a main-part enlarged cross-sectional view showing an enlarged portion in the vicinity where the gas discharge opening of the cylinder-shaped gas generator in the fifth embodiment of the present invention is disposed.
Fig. 18A is a diagram schematically showing the flowing state of the gas in the early stage during actuation of the cylinder-shaped gas generator in the fifth embodiment of the present invention.
Fig. 18B is a diagram schematically showing the flowing state of the gas after a lapse of a prescribed time period from the start of actuation of the cylinder-shaped gas generator in the fifth embodiment of the present invention.

### DESCRIPTION OF EMBODIMENTS

The embodiments of the present invention will be hereinafter described in detail with reference to the accompanying drawings. It is to be noted that the embodiments described below each illustrate an example in which the present invention is applied to a so-called cylinder-shaped gas generator suitably incorporated in a side air bag apparatus and the like.

### [First Embodiment]

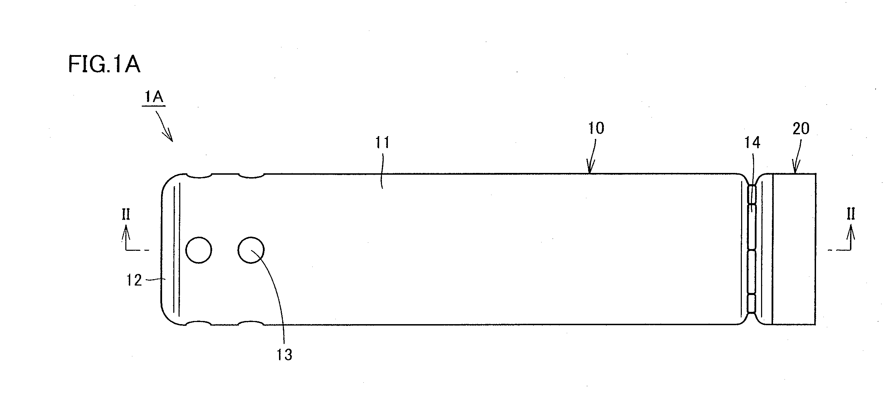

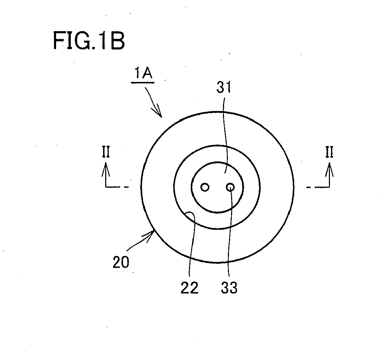

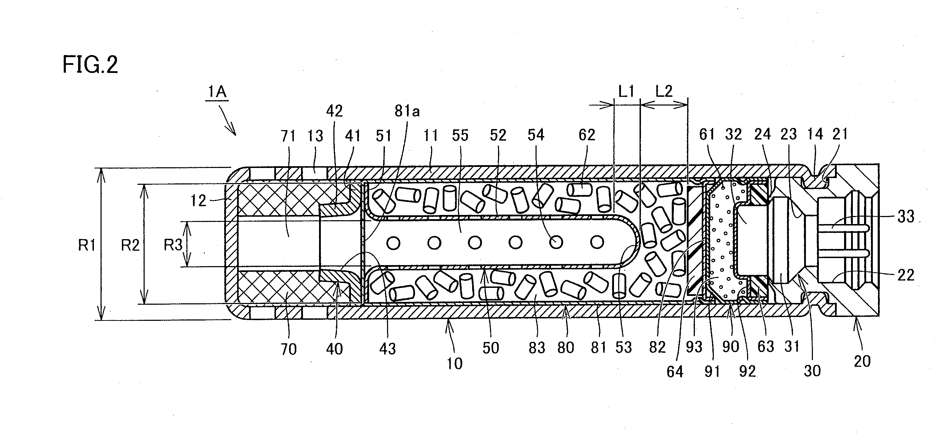

Figs. 1A and 1B each are a diagram showing the exterior structure of a cylinder-shaped gas generator according to the first embodiment of the present invention. Fig. 1A is a front view and Fig. 1B is a right side view. Fig. 2 is a diagram showing the inner structure of the cylinder-shaped gas generator in the present embodiment and also is a schematic cross-sectional view taken along the line II-II shown in each of Figs. 1A and 1B. The exterior structure and the inner structure of the cylinder-shaped gas generator in the present embodiment will be hereinafter described with reference to Figs. 1A, 1B and 2.

As shown in Figs. 1A, 1B and 2, a cylinder-shaped gas generator 1A in the present embodiment has an elongated and circular cylindrical outer shape, and includes a housing as an outer shell member having each end closed in the axial direction. The housing as an outer shell member includes a first housing member 10 having a circular cylindrical shape with a bottom having an end closed in the axial direction and including a circumferential wall portion 11 and a bottom wall portion 12; and a second housing member (squib holder) 20 having a cylindrical shape and including a through portion 23 extending in the direction identical to the axial direction of first housing member 10. Second housing member 20 has an outer circumferential surface provided at its prescribed position with a groove 21 for caulking fixation which will be described later. Groove 21 is annularly formed on the outer circumferential surface of second housing member 20 so as to extend in the circumferential direction thereof. It is to be noted that cylinder-shaped gas generator 1A in the present embodiment is configured such that first housing member 10 is equal in outer diameter to second housing member 20.

Second housing member 20 is fixed to first housing member 10 so as to close the open end of first housing member 10. Specifically, in the state where a part of second housing member 20 is inserted into the open end of first housing member 10, the portion of circumferential wall portion 11 of first housing member 10 corresponding to groove 21 provided in the outer circumferential surface of second housing member 20 is decreased in diameter inwardly in the radial direction to engage with groove 21. This causes second housing member 20 to be fixed to first housing member 10 by caulking. Consequently, one end in the axial direction of the housing is formed by second housing member 20 while the other end in the axial direction of the housing is formed by bottom wall portion 12 of first housing member 10.

The above-described fixation by caulking is referred to as caulking in eight directions by which circumferential wall portion 11 of first housing member 10 is uniformly decreased in diameter inwardly in the radial direction. When the caulking in eight directions is carried out, a caulking portion 14 is provided on circumferential wall portion 11 of first housing member 10.

First housing member 10 may be formed of a member made of metal such as stainless steel, steel, an aluminum alloy, a stainless alloy, and the like, a press-molded product made of metal and molded in a circular cylindrical shape with a bottom by subjecting a rolled steel plate typified by SPCC, SPCD and SPCE to presswork, a molded product made of metal and molded in a circular cylindrical shape with a bottom by performing a process for closing one of axial ends of an electric resistance welded tube (carbon steel tube) typified by STKM, or a molded product molded in a circular cylindrical shape with a bottom by subjecting carbon steel typified by SWCH to cold heading. First housing member 10 is thus formed of a press-molded product made of a rolled steel plate, a molded product of an electric resistance welded tube, and the like, which allows first housing member 10 to be manufactured easily and inexpensively as compared with the case where metal members such as stainless steel and steel are used. In addition, a significant reduction in weight can be achieved. Furthermore, second housing member 20 is formed of a metal member made of stainless steel, steel, an aluminum alloy, a stainless alloy, and the like.

Furthermore, a partition member 40 is disposed in the space within the housing composed of first housing member 10 and second housing member 20. This partition member 40 serves to partition the space within the housing in the axial direction into a working gas generation chamber and a filter chamber. The working gas generation chamber is located approximately in the middle portion in the axial direction of the housing, and stores a part of first airtight container 80 which will be described later. The filter chamber is located in the housing on the other end side in the axial direction (that is, on the bottom wall portion 12 side in first housing member 10) and houses a filter 70 therein which will be described later.

As shown in Fig. 2, an igniter (squib) 30 and an enhancer agent (enhancer) 61 each serving as ignition means are disposed at one end in the axial direction of the housing (that is, in a portion closer to second housing member 20). Igniter 30 and enhancer agent 61 each serving as ignition means are for generating a flame for burning a granular gas generating agent 62 which will be described later. Specifically, enhancer agent 61 is stored in second airtight container 90. A part of the space within the housing that houses igniter 30 and second airtight container 90 corresponds to an ignition chamber. In other words, the ignition chamber is located in the portion of the housing closer to one end thereof in the axial direction and defined by circumferential wall portion 11 of first housing member 10, second housing member 20 and first airtight container 80 described later.

Igniter 30 is inserted into through portion 23 of second housing member 20 and fixed thereto by caulking. More specifically, second housing member 20 is provided with a caulking portion 24 at its end disposed to face the space within the housing. Igniter 30 is inserted into through portion 23 and brought into contact with second housing member 20 and held thereto, in which state caulking portion 24 is caulked. This causes igniter 30 to be grasped by second housing member 20, thereby fixing igniter 30 to second housing member 20.

Igniter 30 serves as an ignition device for generating a flame and includes a base portion 31, an ignition portion 32 and a terminal pin 33. Base portion 31 serves as a component through which a pair of terminal pins 33 are inserted for holding thereof and is disposed adjacent to ignition portion 32. Ignition portion 32 includes an ignition charge for ignition during the actuation and a resistor for burning this ignition charge. Terminal pins 33 are connected to ignition portion 32 in order to ignite the ignition charge.

More specifically, in igniter 30, the pair of terminal pins 33 held by base portion 31 is inserted into ignition portion 32, a resistor (bridge wire) is attached to couple the end of each terminal pin, and the ignition charge is filled in ignition portion 32 so as to surround this resistor or to be brought into contact with this resistor. Examples of the resistor may generally include a nichrome wire or a resistance wire and the like made of an alloy containing platinum and tungsten. Examples of the ignition charge may generally include ZPP (zirconium potassium perchlorate), ZWPP (zirconium tungsten potassium perchlorate), lead tricinate, or the like. Furthermore, the squib cup surrounding ignition portion 32 is generally made of metal or plastic.

When collision is detected, a prescribed amount of current flows in the resistor through terminal pins 33. As a result of a prescribed amount of current flowing in the resistor, Joule heat is generated in the resistor. When receiving this heat, the ignition charge starts burning. High-temperature flame produced by combustion explodes the squib cup storing the ignition charge. The time period from the current flowing in the resistor to actuation of igniter 30 is three milliseconds or shorter when a nichrome wire is used for the resistor.

As described above, enhancer agents 61 are stored in second airtight container 90. Second airtight container 90 includes a cylindrical cup portion 91 having a bottom, and a cap portion 92 closing the opening of cup portion 91. Second airtight container 90 is inserted at the position in the housing on the one end side thereof in the axial direction so as to be brought into contact with igniter 30. In second airtight container 90, cup portion 91 and cap portion 92 are combined and joined together, which allows storage space 93 provided within second airtight container 90 to be airtightly sealed from the outside of second airtight container 90. Cup portion 91 and cap portion 92 are made of materials such as a metal member molded by subjecting a sheet metal (foil) such as copper, aluminum, a copper alloy, and an aluminum alloy to presswork or the like, and a resin member formed by injection molding, sheet molding or the like. Furthermore, cup portion 91 and cap portion 92 are joined together suitably using brazing, adhesion, rolled clamp (caulking) and the like. When a sealing agent is used for joining the components, airtightness can be further improved.

Enhancer agents 61 are ignited by the flame generated by actuation of igniter 30 and burned to generate hot particles. Enhancer agents 61 are required to allow gas generating agent 62 described below to start burning with reliability. Examples of the compositions of enhancer agents 61 may include a high exothermic composition burned at a rate higher than that of gas generating agent 62 described later, such as a composition made of metal powder/oxidant represented by B/KNO₃, B/NaNO₃, Sr(NO₃)₂ or the like. Examples of enhancer agents 61 may include powder, a mold formed in a prescribed shape by a binder, or the like. The enhancer agent molded by the binder may have a variety of shapes, for example, like granules, a column, a sheet, a ball, a cylinder with a single hole, a cylinder with multiple holes, a tablet, and the like. It is to be noted that examples of the binder may include a hydrotalcite group, nitrocellulose and the like, but are not particularly limited thereto.

In addition, a first cushion member 63 is disposed in a part of the ignition chamber surrounding ignition portion 32 of igniter 30 and between second airtight container 90 and second housing member 20. First cushion member 63 serves as a member for fixing various kinds of internal components described later in the axial direction within the housing, and also for accommodating the variations of the axial length of the above-mentioned internal components. Accordingly, first cushion member 63 is sandwiched in the axial direction of the housing between the above-described second airtight container 90 and second housing member 20 and fixed therein. As first cushion member 63, a molded body made of a ceramic fiber, foamed silicone and the like can be applied, for example.

As shown in Fig. 2, first airtight container 80 is disposed in the space within the housing and adjacent to the space in which second airtight container 90 is disposed. First airtight container 80 includes a cylindrical cup portion 81 having a bottom, and a cap portion 82 closing the opening of cup portion 81. First airtight container 80 is inserted into the space within the housing. In first airtight container 80, cup portion 81 and cap portion 92 are combined and joined together, which allows storage space 83 provided within first airtight container 80 to be airtightly sealed from the outside of first airtight container 80. Cup portion 81 and cap portion 82 are made of materials such as a metal member molded by subjecting a sheet metal (foil) such as copper, aluminum, a copper alloy, and an aluminum alloy to presswork or the like, and a resin member formed by injection molding, sheet molding or the like. Furthermore, cup portion 81 and cap portion 82 are joined together suitably using brazing, adhesion, rolled clamp (caulking) and the like. When a sealing agent is used for joining the components, airtightness can be further improved.

Granular gas generating agent 62, a dividing member 50 and a second cushion member 64 are stored in storage space 83 of first airtight container 80. More specifically, second cushion member 64 is disposed at the end portion of first airtight container 80 on the side where second airtight container 90 is located. Gas generating agent 62 and dividing member 50 are disposed in the portion excluding the area in which second cushion member 64 is located. In this case, the above-described working gas generation chamber consists of the space defined by circumferential wall portion 11 of first housing member 10, second cushion member 64, and partition member 40 which will be described later. The working gas generation chamber is further divided into two spaces by the above-described dividing member 50 housed therewithin.

Dividing member 50 is formed of a cylindrical member with a bottom having one end closed and having a hollow portion 55 therein. Dividing member 50 includes a flange portion 51, a circular cylindrical portion 52 as a cylindrical portion and a bottom portion 53. Flange portion 51 is disposed at the end of first airtight container 80 on the partition member 40 side. Flange portion 51 has a main surface on the partition member 40 side that is brought into contact with an axial end 81a of first airtight container 80 on the partition member 40 side. Circular cylindrical portion 52 has a circular cylindrical shape extending in the shape of a straight tube and having an inner diameter and an outer diameter that are constant in the axial direction of the housing. Circular cylindrical portion 52 also continuously extends from the inner circumferential edge of flange portion 51 and is located to protrude from the end of first airtight container 80 on the partition member 40 side toward the inside of storage space 83. Bottom portion 53 continuously extends from circular cylindrical portion 52 to close the end of circular cylindrical portion 52 on the igniter 30 side. It is to be noted that bottom portion 53 is disposed at a prescribed distance from the end of first airtight container 80 on the igniter 30 side. Bottom portion 53 also has a tapered shape such that its outer shape is gradually reduced in size in accordance with a decrease in the distance from igniter 30. In this case, it is preferable that the axial length of dividing member 50 is set at 40% or more and 90% or less of the axial length of first airtight container 80, and more preferably, set at 70% or more and 85% or less of the axial length of first airtight container 80.

The above-described granular gas generating agent 62 is stored in the portion of the working gas generation chamber excluding hollow portion 55 of dividing member 50. In other words, gas generating agent 62 is stored in the space of the working gas generation chamber including the space surrounding circular cylindrical portion 52 and bottom portion 53 of dividing member 50 in the radial direction and the space located between dividing member 50 and second cushion member 64 in the axial direction of the housing.

Granular gas generating agents 62 are fired by hot particles produced by combustion of enhancer agent 61 ignited by igniter 30 and burned to generate gas. Each of granular gas generating agents 62 is generally formed as a molded body including a fuel, an oxidant and an additive. As a fuel, for example, a triazole derivative, a tetrazole derivative, a guanidine derivative, an azodicarbonamide derivative, a hydrazine derivative, or the like or a combination thereof is used. Specifically, for example, nitroguanidine, guanidine nitrate, cyanoguanidine, 5-aminotetrazole, or the like is suitably used. Furthermore, used as an oxidant is, for example, basic nitrate such as basic copper nitrate, perchlorate such as ammonium perchlorate and potassium perchlorate, nitrate including cation selected from alkali metal, alkaline-earth metal, transition metal, ammonia, and the like. As nitrate, for example, sodium nitrate, potassium nitrate, or the like is suitably used. Furthermore, an additive includes a binder, a slag forming agent, a combustion adjustment agent, and the like. As a binder, for example, an organic binder such as a cellulose derivative such as hydroxypropylene methylcellulose, a metal salt of carboxymethyl cellulose or stearic acid salt, or an inorganic binder such as synthetic hydroxytalcite or acid clay can suitably be used. As a slag forming agent, silicon nitride, silica, acid clay or the like can suitably be used. As a combustion adjustment agent, metal oxide, ferrosilicon, activated carbon, graphite or the like can suitably be used.

The molded body of gas generating agent 62 formed in a granular shape may have a variety of shapes like a granule, a pellet, a column, a disk, and the like. A porous molded body (for example, a cylindrical shape with a single hole or a cylindrical shape with multiple holes) is also used. These shapes are preferably selected as appropriate depending on the specifications of the air bag apparatus having cylinder-shaped gas generator 1A incorporated therein. An optimum shape is preferably selected according to the specifications, for example, such that a shape is selected that allows the working gas generation speed to change over time during combustion of gas generating agents 62. In addition to the shape of gas generating agent 62, the size and the filling amount of the molded body are preferably selected as appropriate in consideration of the linear combustion rate, the pressure index of gas generating agent 62, and the like.

In addition, it is particularly suitable to use granular gas generating agent 62 containing a guanidine-based compound as a fuel and basic copper nitrate as an oxidant. When this gas generating agent containing a guanidine-based compound and basic copper nitrate is used, there arises no toxicity problem as caused by an azide compound. The combustion temperature is also lowered below the melting point of the slag, which allows the slug to be effectively captured by filter 70 as a solid material.

A plurality of first communication holes 54 are provided in circular cylindrical portion 52 of dividing member 50 so as to extend in the circumferential direction and in the axial direction. First communication holes 54 are provided for providing communication between the space storing granular gas generating agent 62 and hollow portion 55 of dividing member 50. First communication holes 54 each are configured to have a diameter smaller than that of granular gas generating agent 62. It is preferable that first communication holes 54 are not provided in bottom portion 53 of dividing member 50. This is because, if first communication holes 54 are provided in bottom portion 53, the holes may be closed during the operation of cylinder-shaped gas generator 1A, which may lead to variations in performance.

Dividing member 50 functions as a pressure bulkhead for producing a differential pressure between the space containing granular gas generating agent 62 and hollow portion 55 described above at the time of actuation, and is made of a member having a prescribed strength. Specifically, dividing member 50 is made of a metal member such as stainless steel, steel, an aluminum alloy, and a stainless alloy, for example.

Second cushion member 64 serves as a crush preventing member for preventing gas generating agents 62 formed of molded bodies from being crushed by vibration and the like. Suitably, a molded body of ceramic fiber, foamed silicone or the like is used for second cushion member 64. During actuation, combustion of enhancer agent 61 causes second cushion member 64 to be opened or split, and in some cases, burned down.

As described above, cylinder-shaped gas generator 1A in the present embodiment is configured such that gas generating agent 62 and enhancer agent 61 are enclosed in first airtight container 80 and second airtight container 90, respectively. Accordingly, these agents are enclosed in their respective airtight containers in advance, which allows not only facilitation of the assembly operation of cylinder-shaped gas generator 1A, but also allows elimination of the need to additionally subject the housing to an airtightly-sealing process. Consequently, the number of parts can be reduced while the configuration can be simplified. Furthermore, cylinder-shaped gas generator 1A in the present embodiment is configured such that, in addition to gas generating agent 62, dividing member 50 and second cushion member 64 are enclosed in first airtight container 80 in advance. Accordingly, the effect of further facilitating the assembly operation of cylinder-shaped gas generator 1A can also be achieved.

As shown in Fig. 2, partition member 40 partitions the space within the housing in the axial direction into the working gas generation chamber and the filter chamber. Partition member 40 is disposed so as to be brought into contact with the above-described first airtight container 80 in the space within the housing. Partition member 40 includes an annular plate portion 41, a cylindrical protruding portion 42 and a second communication hole 43. Annular plate portion 41 is disposed such that it is brought into contact with first airtight container 80 and extends orthogonal to the axis of the housing. Cylindrical protruding portion 42 is disposed so as to continuously extend from the inner circumferential edge of annular plate portion 41 and to protrude in the direction away from the above-described first airtight container 80. Second communication hole 43 is defined by cylindrical protruding portion 42 and serves to provide communication between hollow portion 55 of dividing member 50 and the filter chamber.

Partition member 40 is fit or loosely fit into the housing. Thus, the housing is not subjected to the caulking process for fixing partition member 40. The term "fit" includes so-called press fit, and means the state where the outer circumferential edge of annular plate portion 41 of partition member 40 is attached in contact with the inner circumferential surface of the housing. Furthermore, the term "loosely fit" means the state where the outer circumferential edge of annular plate portion 41 of partition member 40 and the inner circumferential surface of the housing are not necessarily in contact with each other over the entire circumference, but are inserted with a little gap (allowance in mechanical fixing). In addition, it is preferable that partition member 41 is loosely fit into the housing for the purpose of facilitating assembly.

Partition member 40 is attached to the end of filter 70 described below that is located on the working gas generation chamber side. Partition member 40 is sandwiched between filter 70 and first airtight container 80 storing the above-described granular gas generating agent 62, so that it is supported within the housing. In addition, partition member 40 is formed by presswork or the like of the plate member made of metal such as stainless steel, steel, an aluminum alloy, and a stainless steel alloy, for example.

As shown in Fig. 2, filter 70 is disposed in the filter chamber defined by partition member 40 and circumferential wall portion 11 and bottom wall portion 12 of first housing member 10. The filter chamber housing filter 70 is provided adjacent to the working gas generation chamber with partition member 40 interposed therebetween, and located closer to the other end of the housing (that is, closer to bottom wall portion 12 of first housing member 10) than the working gas generation chamber.

Filter 70 extends in the same direction as the axial direction of the housing and is made of a circular cylindrical member having a hollow communication portion 61 that reaches the axial end face thereof, in which the end face on the working gas generation chamber side in the axial direction is in contact with partition member 40, and the other end face is in contact with bottom wall portion 12 of first housing member 10. Furthermore, the outer circumferential surface of filter 70 is in contact with the inner circumferential surface of circumferential wall portion 11 of first housing member 10. When filter 70 made of such a circular cylindrical member is used, the flow resistance of the working gas flowing through the filter chamber at the time of actuation may be suppressed low, which allows an efficient flow of the working gas to be achieved.

Filter 70 used herein is obtained, for example, by winding a metal wire material such as stainless steel and steel which is then subjected to a sintering process, by subjecting a mesh material having a metal wire material interwoven therewith to presswork for compression, by winding a perforated metal plate, or the like. In this case, examples of the mesh material may specifically include a stockinette metal mesh, a plain-woven metal mesh, an assembly of crimp-woven metal wire materials, and the like. Furthermore, examples of the perforated metal plate may include expanded metal processed in a mesh pattern by cutting slits in a metal plate in a staggered arrangement to expand each of these slits to provide a hole, hooked metal obtained by perforating a metal plate and crushing burrs produced at the edge of the hole to flatten the same, and the like. In this case, the size and the shape of each hole to be provided can be suitably modified as appropriate, and the single metal plate may include holes that are different in size and shape. A metal plate that can be suitably utilized may include, for example, a steel plate (mild steel) and a stainless steel plate, and may also include a nonferrous metal plate such as aluminum, copper, titanium, nickel, an alloy thereof or the like.

The filter thus obtained by winding a metal wire material or a mesh material in a cylindrical shape which is then subject to a sintering or compression process and the filter formed of expanded metal and hooked metal are provided with a gap therein, which allows the working gas to flow therethrough as described above. When the working gas produced in the working gas generation chamber passes through filter 70, filter 70 functions as cooling means serving to remove the high temperature heat of the working gas for cooling thereof, and also functions as removal means for removing the residues (slag) and the like contained in the working gas.

As shown in Fig. 2, a gas discharge opening 13 is provided in the portion of circumferential wall portion 11 of first housing member 10 defining the filter chamber. Gas discharge opening 13 serves as a hole for discharging the working gas generated within cylinder-shaped gas generator 1A to the outside. A plurality of gas discharge openings 13 are provided in the circumferential direction and the axial direction of circumferential wall portion 11 of first housing member 10.

In addition, a female connector (not shown) is attached to the end of cylinder-shaped gas generator 1A in the vicinity where second housing member 20 is disposed. More specifically, second housing member 20 is provided with a recess 22, to which a female connector is attached. Connected to this female connector is a male connector of the harness that serves to transmit the signal from a collision detecting sensor provided separately from cylinder-shaped gas generator 1A. The female connector is provided with a shorting clip (not shown) as appropriate. This shorting clip is attached in order to prevent cylinder-shaped gas generator 1A from malfunctioning by electrostatic discharge or the like during transportation and the like of cylinder-shaped gas generator 1A. The shorting clip is disengaged from terminal pin 33 by inserting the male connector of the harness into the female connector at the stage of installation in the air bag apparatus.

Then, the operation during actuation of cylinder-shaped gas generator 1A set forth above will be described with reference to Fig. 2. When there is a collision of a vehicle equipped with an air bag apparatus having cylinder-shaped gas generator 1A in the present embodiment incorporated therein, the collision detection means separately provided in the vehicle detects the collision. Based on this detection, igniter 30 is actuated. When igniter 30 is actuated, the pressure within ignition portion 32 is raised by combustion of the ignition charge, which causes explosion of ignition portion 32. Consequently, flames flow to the outside of ignition portion 32.

After the explosion of ignition portion 32, the temperature and pressure in the space surrounding ignition portion 32 are raised, which causes melting or explosion of second airtight container 90. Consequently, enhancer agent 61 stored in second airtight container 90 is ignited and burned by the flame produced by actuation of igniter 30, thereby generating a great amount of hot particles. The generated great amount of hot particles causes melting or explosion of cap portion 82 of first airtight container 80, to open or split second cushion member 64. The hot particles then flow into the working gas generation chamber.

The hot particles flowing into the working gas generation chamber causes ignition and then combustion of granular gas generating agents 62 starting from the agent located on the side where igniter 30 is disposed, to thereby produce a large amount of working gas. The working gas thus produced passes through first communication hole 54 provided in dividing member 50, and then flows into hollow portion 55 of dividing member 50. Then, the working gas causes explosion of axial end 81a of cup portion 81 of first airtight container 80 located in front thereof, and passes through second communication hole 43 provided in partition member 40 and flows into the filter chamber.

The working gas flowing into the filter chamber passes through hollow communication portion 71 of filter 70 and then into filter 70. When the working gas passes through filter 70, it is cooled to a prescribed temperature and discharged through gas discharge opening 13 to the outside of cylinder-shaped gas generator 1A. The working gas discharged through gas discharge opening 13 is guided into the air bag for inflating and expanding the air bag.

In cylinder-shaped gas generator 1A according to the present embodiment, in the early stage of combustion of granular gas generating agent 62, the portion of gas generating agents 62 disposed between dividing member 50 and second cushion member 64 burns sequentially starting from the agent located on the side where second cushion member 64 is disposed. Then, the internal pressure in the working gas generation chamber excluding hollow portion 55 rapidly increases to reach a high pressure to a appreciable extent that is suitable for burning gas generating agent 62, to thereby promote combustion of gas generating agent 62. The working gas then flows through first communication hole 54 provided in circular cylindrical portion 52 of dividing member 50 into hollow portion 55 without being obstructed by unburned gas generating agent 62.

Then, after completion of the early stage of combustion of granular gas generating agents 62, the portion of granular gas generating agents 62 located in the space surrounding circular cylindrical portion 52 of dividing member 50 bums sequentially starting from the agent located on the side where second cushion member 64 is disposed. Then, the working gas is produced with stability while maintaining the internal pressure in the working gas generation chamber excluding hollow portion 55. The produced working gas then flows through first communication hole 54 provided in circular cylindrical portion 52 of dividing member 50 into hollow portion 55 without being obstructed by unburned gas generating agents 62.

In addition, in cylinder-shaped gas generator 1A in the present embodiment, the working gas generation chamber and the filter chamber are arranged side by side in the axial direction of the housing. According to this configuration, the working gas produced by combustion of gas generating agent 62 flows through first communication hole 54 provided in dividing member 50 into hollow portion 55 of dividing member 50, and thus, the working gas is collected therein. Then, the working gas flows from the axial end of dividing member 50 on the filter chamber side through second communication hole 43 of partition member 40 into the filter chamber. Therefore, the air bag apparatus equipped with this cylinder-shaped gas generator 1A allows gradual expansion of an air bag.

Thus, in cylinder-shaped gas generator 1A in the present embodiment, gas generating agents 62 are stored in the portion of the working gas generation chamber excluding hollow portion 55 of dividing member 50. When gas generating agents 62 ignited by igniter 30 burn sequentially starting from the agent located on the side where igniter 30 is disposed, to produce working gas, the produced working gas immediately flows through first communication hole 54 provided in dividing member 50 into hollow portion 55 of dividing member 50 and then into the filter chamber. Therefore, by employing the configuration as described above, the unburned gas generating agent can be prevented from acting as flow resistance against the working gas, which allows implementation of the cylinder-shaped gas generator providing excellent output characteristics.

In other words, when the configuration as in cylinder-shaped gas generator 1A in the present embodiment is employed, unburned gas generating agents may be prevented by the function of dividing member 50 from acting as flow resistance against the working gas, which allows implementation of the cylinder-shaped gas generator providing stable output characteristics.

In order to implement a cylinder-shaped gas generator providing stable output characteristics as described above, it is extremely important to make an adjustment with accuracy such that the amount of gas generating agents 62 to be filled in the portion located between dividing member 50 and second cushion member 64 reaches a predetermined amount. This is because when the amount of gas generating agents 62 to be filled in this portion is insufficient, the internal pressure in the portion in the working gas generation chamber excluding hollow portion 55 cannot be sufficiently raised at the early stage of combustion, which causes a significant influence upon the subsequent combustion state of gas generating agent 62, with the result that desired output characteristics cannot be achieved.

Thus, as described above, cylinder-shaped gas generator 1A according to the present embodiment is configured such that dividing member 50 is formed of circular cylindrical portion 52 having first communication hole 54 and bottom portion 53 not having first communication hole 54, and that bottom portion 53 has a tapered shape to provide an outer shape that is gradually decreased in size in accordance with a decrease in the distance from igniter 30. This allows an adjustment to be made with accuracy such that the amount of gas generating agents 62 to be filled in the portion between dividing member 50 and second cushion member 64 reaches a predetermined amount, which will be hereinafter described in detail.

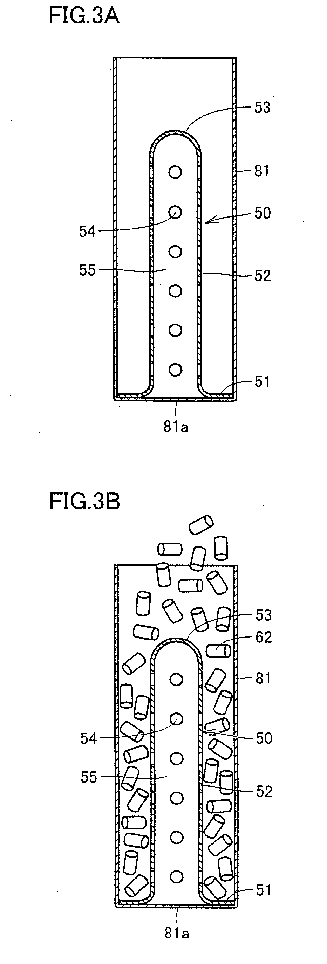

Figs. 3A to 3C each are a schematic cross-sectional view showing a filling and sealing process of the gas generating agent into the first airtight container when manufacturing the cylinder-shaped gas generator in the present embodiment.

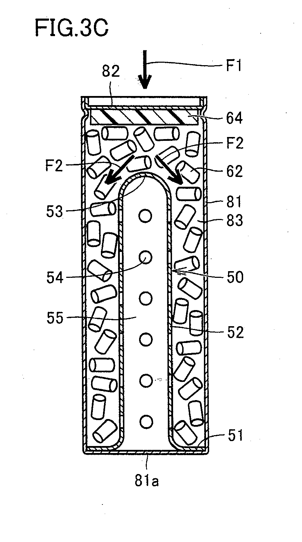

As shown in Figs. 2 and 3A to 3C, in cylinder-shaped gas generator 1A according to the present embodiment, bottom portion 53 of dividing member 50 is configured to have a tapered shape such that its outer shape is gradually reduced in size in accordance with a decrease in the distance from igniter 30 (on the cap portion 82 side in the subassembly shown in Fig. 3C). In this case, the outer surface of bottom portion 53 is configured to have a hemispherical shape. It is to be noted that the outer surface of bottom portion 53 is not necessarily configured to have a hemispherical shape, but may have any shape as long as bottom portion 53 has a tapered outer shape.

In the step of filling storage space 83 of first airtight container 80 with granular gas generating agents 62 for sealing thereof, as shown in Fig. 3A, cylindrical cup portion 81 having a bottom and serving as a part of first airtight container 80 is first prepared, and then, dividing member 50 is disposed within cup portion 81. More specifically, dividing member 50 is inserted through the opening of cup portion 81 into cup portion 81, and flange portion 51 of dividing member 50 is brought into contact with axial end 81a corresponding to the bottom wall of cup portion 81.

Then, as shown in Fig. 3B, the predetermined amount of granular gas generating agents 62 is filled in the space within cup portion 81. In this case, granular gas generating agents 62 introduced into cup portion 81 smoothly moves down along bottom portion 53 of dividing member 50, falls into the space located within cup portion 81 and surrounding dividing member 50, and then, is stored in this space. After this space is filled with granular gas generating agents 62, granular gas generating agents 62 will be further supplied so as to cover the space and bottom portion 53. In this case, more preferably, slight vibration or the like of cup portion 81 allows granular gas generating agents 62 to be densely filled without any gap. However, in order to apply vibration to cup portion 81, the vibration should be weak enough so that granular gas generating agents 62 are not crushed.

Then, as shown in Fig. 3C, second cushion member 64 is disposed so as to cover the upper surface of granular gas generating agents 62 that are filled. Then, from thereabove, cap portion 82 is installed to close the opening of cup portion 81, so that the space within cup portion 81 is airtightly sealed from outside. Cap portion 82 is installed in cup portion 81, as described above, suitably using brazing, adhesion, rolled clamp (caulking) and the like, and more preferably, using bonding employing a sealing agent.

In this case, in order to more densely fill storage space 83 with granular gas generating agents 62 so as to prevent variations in the density of granular gas generating agents 62, cap portion 82 is pressed against cup portion 81 with a load F1 shown in the figure, in which state installation is carried out. In this case, since bottom portion 53 of dividing member 50 has a smooth curved surface, load F1 to be applied to granular gas generating agents 62 is distributed along this curved surface as shown in the figure, thereby resulting in a load F2 that is to be applied in the direction along this curved surface. This causes gas generating agents 62 located on bottom portion 53 to smoothly move along the curved surface. Therefore, it becomes possible to make an adjustment with accuracy such that the amount of gas generating agents 62 to be filled in the portion located between dividing member 50 and second cushion member 64 reaches a predetermined amount. According to the above-described configuration, it also becomes possible to prevent a load from being forcedly applied to granular gas generating agents 62 and also possible to prevent gas generating agents 62 from being sandwiched and crushed between cap portion 82 and bottom portion 53.

Thus, according to cylinder-shaped gas generator 1A configured as in the present embodiment, it becomes possible to make an adjustment with accuracy such that the amount of gas generating agents 62 to be filled in the portion located between dividing member 50 and second cushion member 64 reaches a predetermined amount. Furthermore, gas generating agents 62 can also be prevented from being crushed during filling thereof. This allows implementation of a cylinder-shaped gas generator that is reduced in size and weight and allows desired output characteristics to be achieved with stability.

Furthermore, in cylinder-shaped gas generator 1A according to the present embodiment, as described above, gas generating agents 62 are enclosed in first airtight container 80 and enhancer agents 61 are enclosed in second airtight container 90. Accordingly, it is not necessary to subject the housing to the sealing process for airtightly enclosing gas generating agents 62 and enhancer agents 61. Therefore, the outer shape of the housing can be reduced in size correspondingly (that is, reduced in diameter and length), and the housing can also be increased in thickness correspondingly, so that the pressure resistance performance can be improved. Consequently, it becomes possible to implement a cylinder-shaped gas generator having a structure that is advantageous to reduce the size and improve the pressure resistance performance.

Furthermore, according to cylinder-shaped gas generator 1A in the present embodiment, the working gas produced in the working gas generation chamber does not flow in the axial direction of the housing but flows only in the radial direction of the housing through first communication hole 54 into hollow portion 55 of dividing member 50, and then flows through second communication hole 43 into the filter chamber. This leads to a significant reduction in the amount of the solid residues produced by breakage of the gas generating agent under combustion and the unburned gas generating agent by the flow of the working gas. The solid residue is also prevented from being further broken into fine-grained residues by flow of the working gas. Consequently, the load to filter 70 is significantly reduced. Thus, dividing member 50 also performs a filtering function for removing a part of the residues, so that filter 70 can be reduced in size to thereby implement a cylinder-shaped gas generator reduced in size and weight.

In cylinder-shaped gas generator 1A according to the present embodiment as described above, referring to Fig. 2, assuming that the outer diameter of first housing member 10 is set at R1, R1 preferably satisfies the condition of 15 mm ≤ R1 ≤ 22 mm, and more preferably, satisfies the condition of 15 mm ≤ R1 ≤ 20 mm.

Furthermore, in cylinder-shaped gas generator 1A according to the present embodiment as described above, referring to Fig. 2, it is assumed that the distance between the end of bottom portion 53 of dividing member 50 on the igniter 30 side and the end of the working gas generation chamber on the igniter 30 side (that is, a portion in contact with second cushion member 64) is set at L2 (this distance corresponds to the axial length of the working gas generation chamber in the area where dividing member 50 is not disposed and also corresponds to the axial length in the area where gas generating agent 62 is contained entirely along the radial direction of the working gas generation chamber), and that the diameter of the working gas generation chamber (more specifically, the diameter of the area in the working gas generation chamber in which gas generating agent 62 is contained, that is, the internal diameter of first airtight container 80) is set at R2. In this case, it is preferable that these L2 and R2 satisfy the condition of 0.026 ≤ L2/R2 ≤ 0.71.

Furthermore, in cylinder-shaped gas generator 1A in the present embodiment as described above, referring to Fig. 2, assuming that the diameter of hollow portion 55 of dividing member 50, that is, the internal diameter of circular cylindrical portion 52 of dividing member 50, is set at R3, it is preferable that the above-described R2 and R3 satisfy the condition of 0.28 ≤ R3/R2 ≤ 0.54.

In addition, in cylinder-shaped gas generator 1A according to the present embodiment as described above, referring to Fig. 2, assuming that the distance from the boundary portion between bottom portion 53 and circular cylindrical portion 52 in dividing member 50 to the end of bottom portion 53 on the igniter 30 side is set at L1, it is preferable that L1 satisfies the condition of 0 mm < L1 ≤ 10 mm, and more preferably, satisfies the condition of 1 mm ≤ L1 ≤ 7 mm. In this case, assuming that above-described L1 is set at 0 mm, bottom portion 53 having a tapered shape does not essentially exist. Consequently, gas generating agents 62 cannot be efficiently filled.

By satisfying these conditions, the housing can be prevented from being damaged while promoting combustion of gas generating agents 62 also when first housing member 10 is formed using a press-molded product made of a rolled steel plate or a molded product obtained by subjecting an electric resistance welded tube to the closing process. Specifically, in the case where the conditions are satisfied, at the early stage of combustion of gas generating agents 62 and after completion of this early stage of combustion as described above, it becomes possible to appropriately maintain the internal pressure in the working gas generation chamber and also possible to suppress unintentional deformation of first housing member 10 formed of a press-molded product made of a rolled steel plate or a molded product obtained by subjecting an electric resistance welded tube to the closing process. Therefore, also when first housing member 10 is formed using a press-molded product made of a rolled steel plate or using a molded product obtained by subjecting an electric resistance welded tube to the closing process, it becomes possible to implement a cylinder-shaped gas generator that is reduced in size and weight and provides desired output characteristics by satisfying the above-described conditions.

In the case where the above-described L2 and R2 are set on the condition of L2/R2 < 0.026, it is experimentally confirmed that the maximum internal pressure in the working gas generation chamber is less than 35 MPa. In this case, any desired gas output cannot be achieved, which may lead to insufficient inflation and expansion of the air bag. In contrast, in the case where the above-described L2 and R2 are set on the condition of 0.71 < L2/R2, it is experimentally confirmed that the maximum internal pressure in the working gas generation chamber exceeds 90 MPa. In this case, first housing member 10 formed of a press-molded product made of a rolled steel plate or a molded product obtained by subjecting an electric resistance welded tube to the closing process may be unintentionally deformed. In order to ensure a stable operation with more reliability, it is more suitable that the above-described L2 and R2 satisfy the condition of 0.053 ≤ L2/R2 ≤ 0.57.

Furthermore, in the case where the above-described R3 and R2 are set on the condition of R3/R2 < 0.28, it is experimentally confirmed that the maximum internal pressure in the working gas generation chamber exceeds 90 MPa. In this case, first housing member 10 formed of a press-molded product made of a rolled steel plate or a molded product obtained by subjecting an electric resistance welded tube to the closing process may be unintentionally deformed. On the other hand, in the case where the above-described R3 and R2 are set on the condition of 0.54 < R3/R2, it is experimentally confirmed that the maximum internal pressure in the working gas generation chamber is less than 35 MPa. In this case, any desired gas output cannot be achieved, which may lead to insufficient inflation and expansion of the air bag and also may cause a problem that it is difficult to achieve sufficient filling with gas generating agents 62. In addition, in order to ensure a stable operation with more reliability, it is more suitable that the above-described R3 and R2 satisfy the condition of 0.32 ≤ R3/R2 ≤ 0.43.

Furthermore, according to cylinder-shaped gas generator 1A configured as described above, the internal pressure in the working gas generation chamber can be maintained during actuation appropriately in the high pressure environment in which combustion of gas generating agents 62 is promoted. Also, the amount of the residues produced during combustion of gas generating agents 62 can be appropriately decreased. Therefore, in cylinder-shaped gas generator 1A of the present embodiment, partition member 40 and filter 70 each can be configured to have a shape and an installation structure as described below.

Specifically, in cylinder-shaped gas generator 1A according to the present embodiment, cylindrical protruding portion 42 of partition member 40 partitioning the working gas generation chamber and the filter chamber is configured to have a conical plate shape that is gradually decreased in diameter such that the opening area of second communication hole 43 defined by cylindrical protruding portion 42 is decreased in accordance with an increase in the distance from annular plate portion 41 (in accordance with an increase in the distance from the working gas generation chamber and with a decrease in the distance from the end of cylindrical protruding portion 42). Also, partition member 40 is fit or loosely fit into the housing. Therefore, first housing member 10 is not subjected to the caulking process for fixing partition member 40. Accordingly, in cylinder-shaped gas generator 1A in the present embodiment, the assembly can be carried out easily as compared with the conventional case. The following is a reason why partition member 40 can sufficiently perform its function even when the above-described installation structure is employed.

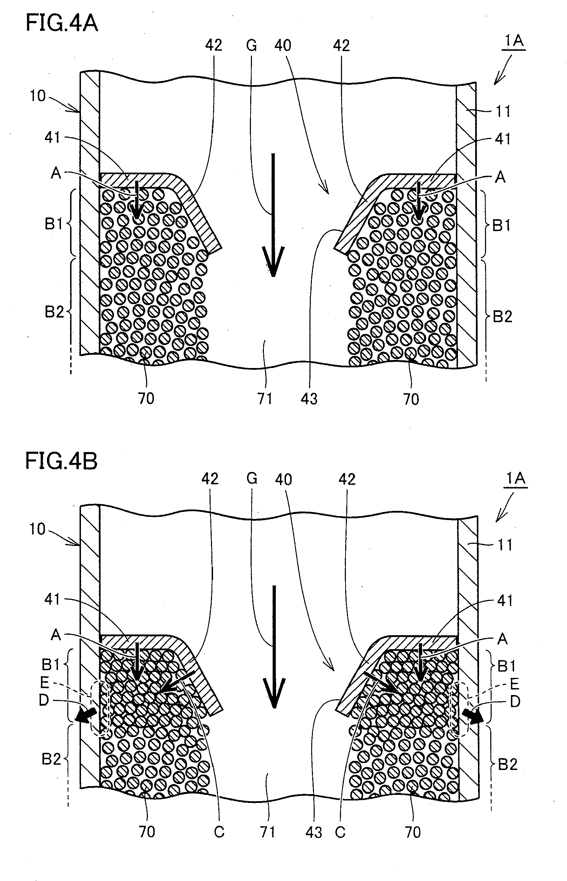

Figs. 4A and 4B each are a main-part enlarged cross-sectional view showing an enlarged portion in the vicinity where the partition member of the cylinder-shaped gas generator in the present embodiment is provided. Fig. 4A is a diagram showing the state immediately after the start of actuation of the cylinder-shaped gas generator. Fig. 4B is a diagram showing the state after a lapse of a prescribed time period from the start of actuation. In Figs. 4A and 4B, the flowing direction of the working gas is indicated by an arrow G while the working gas generation chamber is not specifically illustrated.

As shown in Fig. 4A, immediately after the start of actuation of cylinder-shaped gas generator 1A, when receiving the thrust force of the working gas of high temperature and high pressure produced in the working gas generation chamber (that is, the pressure produced in accordance with an increase in the internal pressure in the working gas generation chamber), annular plate portion 41 of partition member 40 receives the force in the axial direction of the housing toward filter 70 (the force indicated by an arrow A in the figure). Consequently, annular plate portion 41 of partition member 40 starts to move toward filter 70. This movement of annular plate portion 41 causes compression, in the axial direction of the housing, of the portion of filter 70 surrounded by partition member 40 and the housing (that is, the portion in the vicinity of the end of filter 70 on the working gas generation chamber side, that is, the portion included in a region B1 shown in the figure).

Thus, filter 70 is provided with a gap therewithin that is provided by winding a metal wire material or a mesh material having a metal wire material interwoven therewith, or by compressing the same by presswork. In this case, as shown in Fig. 4B, the volume of the gap is decreased in accordance with the above-described movement of annular plate portion 41. In addition, while the metal wire material is further densely filled in region B1, it tends to expand in the radial direction of the housing, thereby generating a force to cause cylindrical protruding portion 42 of partition member 40 to be squeezed inwardly in the radial direction of the housing. However, cylindrical protruding portion 42 of partition member 40 is applied with a force approximately in the radial direction of the housing toward the outside in accordance with an increase in the internal pressure as described above (the force indicated by an arrow C shown in the figure). Accordingly, this force overwhelms the force causing cylindrical protruding portion 42 of partition member 40 to be squeezed inwardly in the radial direction of the housing. In addition, its reaction force (the force indicated by an arrow D in the figure) is to be added to the contact portion between the housing and filter 70 (a region E shown in the figure). This causes a frictional force to be generated in the contact portion between the housing and filter 70. This frictional force then serves as a brake force for suppressing further movement of partition member 40 toward filter 70.

In this case, the reaction force (the force indicated by arrow D in the figure) serves to act in the direction orthogonal to the radial direction and the axial direction of the housing. Accordingly, the reaction force is to act as a high brake force that prevents movement of partition member 40 in a wide range of the housing, so that this brake force can serve to suppress the amount of movement of partition member 40 to be small. Consequently, filter 70 is to be reliably protected by partition member 40, so that breakage of filter 70 can be prevented. Furthermore, since the outer edge of partition member 40 is pressed into contact with the inner circumferential surface of the housing, it becomes possible to reliably prevent the phenomenon that the working gas is discharged from gas discharge opening 13 through the above-described contact portion to the outside of the housing without passing through filter 70, that is, a so-called bypass phenomenon.

Furthermore, in cylinder-shaped gas generator 1A in the present embodiment, cylindrical protruding portion 42 of partition member 40 is configured so as to cover only the area in the vicinity of the end of filter 70 on the working gas generation chamber side. Accordingly, the internal area of filter 70 corresponding to the portion located in a region B2 shown in Fig. 4B is maintained in the state where a sufficient gap is provided. Accordingly, the working gas can smoothly flow in the above-described portion without influence of movement and deformation of partition member 40 as described above. Therefore, the functions of filter 70 to cool the working gas and to collect slag are not impaired.

Furthermore, cylinder-shaped gas generator 1A in the present embodiment is configured such that, when partition member 40 and filter 70 are projected in the axial direction of the housing onto the plane orthogonal to this axis, the inner edge of the region onto which filter 70 is projected is located outside of the inner edge of the region onto which partition member 40 is projected. In other words, as seen from the working gas generation chamber in plan view of partition member 40 and filter 70, the relative positional relationship between partition member 40 and filter 70 is adjusted such that filter 70 is completely covered by partition member 40. The above-described configuration causes the working gas of high temperature and high pressure having passed through second communication hole 43 of partition member 40 to flow along the inner circumferential surface of filter 70. Consequently, the rate of spraying the working gas directly onto filter 70 can be significantly decreased.

In addition, in cylinder-shaped gas generator 1A in the present embodiment, partition member 40 is held during actuation by a portion of filter 70 located in the above-described region B1. This eliminates the need to design partition member 40 such that the thrust force of the working gas can be resisted only by partition member 40, thereby allowing the thickness to be decreased as compared with the conventional case. Specifically, in consideration of the specifications of a commonly-used cylinder-shaped gas generator, when a steel material is used as partition member 40, it is sufficient to design the steel material to have a thickness of approximately 0.7 mm or more.

As described above, when the configuration as in cylinder-shaped gas generator 1A in the present embodiment is employed, it is possible to achieve an effect of eliminating the need to subject the housing to the caulking process for attachment of partition member 40, and an effect of allowing partition member 40 to be reduced in thickness. Accordingly, cylinder-shaped gas generator 1A can be reduced in size and weight on the whole without deteriorating the performance. Furthermore, the above-described configuration is employed to thereby allow elimination of the caulking process for fixing partition member 40 onto the housing, so that the manufacturing cost can be reduced. Therefore, it becomes possible to achieve cylinder-shaped gas generator 1A that can be readily manufactured and can be reduced in size and weight without deteriorating the performance.

### [Examples]

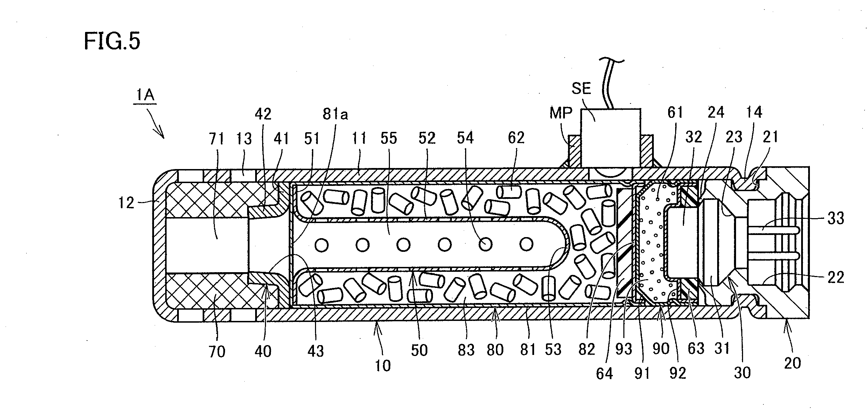

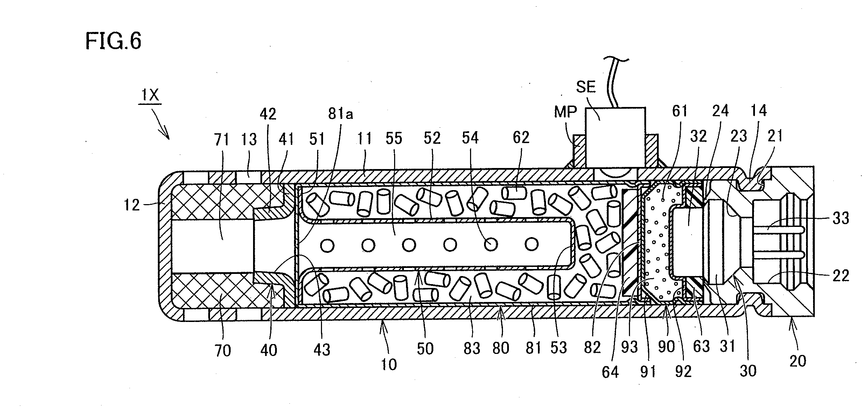

The details and the results of the verification test conducted for verifying the effects of the present invention will be hereinafter described in detail. Fig. 5 is a schematic cross-sectional view showing the configuration of the cylinder-shaped gas generator according to the example used in the verification test, and Fig. 6 is a schematic cross-sectional view showing the configuration of the cylinder-shaped gas generator according to the comparative example used in the verification test. First, referring to Figs. 5 and 6, the configuration of the sample used in the verification test will be described.

As shown in Fig. 5, cylinder-shaped gas generator 1A according to the example has a structure shown in the first embodiment of the present invention as described above. It is to be noted that a pressure sensor SE is attached to first housing member 10 at the prescribed position in order to allow measurement of the internal pressure in the working gas generation chamber during actuation. In this case, pressure sensor SE of a strain gage type is used. Pressure sensor SE is attached to first housing member 10 as in the following manner. First, an opening and a sensor installation port MP are provided in circumferential wall portion 11 of first housing member 10 at the prescribed position. Then, pressure sensor SE is attached to sensor installation port MP so as to close the opening. This causes the pressure-sensitive surface of pressure sensor SE to face the working gas generation chamber.

In this case, in cylinder-shaped gas generator 1A according to the example, a molded product obtained by performing a process for closing one of axial ends of an electric resistance welded tube typified by STKM is used as first housing member 10. Cylinder-shaped gas generator 1A has an axial length of 83 mm. First housing member 10 has an axial length of 78 mm and an outer diameter R1 1 of φ 20 mm. The working gas generation chamber has a diameter R2 of φ 16 mm and an axial length of 40 mm. Furthermore, distance L1 from the boundary portion between bottom portion 53 and circular cylindrical portion 52 in dividing member 50 to the end of bottom portion 53 on the igniter 30 side is 4.7 mm, while distance L2 from the end of bottom portion 53 on the igniter 30 side to the end of the working gas generation chamber on the igniter 30 side is 7 mm. Second cushion member 64 also has a thickness of 1.5 mm. Dividing member 50 has an axial length of 31.5 mm and hollow portion 55 has a diameter R3 of φ 6 mm. A total of 24 first communication holes 54 are provided in circular cylindrical portion 52 of dividing member 50, in which four first communication holes are provided per row in the circumferential direction of circular cylindrical portion 52, and six rows of the holes are arranged with 4.4 mm pitches in the axial direction of circular cylindrical portion 52. It is to be noted that each first communication hole 54 is a circular hole of φ 2 mm.

Gas generating agents 62 to be filled in the working gas generation chamber was produced by performing dry blending of 56.2 parts by weight of guanidine nitrate, 33.8 parts by weight of basic copper nitrate, 10.0 parts by weight of potassium perchlorate, and 0.4 parts by weight of highly dispersible silica, to which 0.6 parts by weight of 11.0 parts by weight of polyvinyl alcohol aqueous solution was added by spraying, and then subjected to wet granulation, to thereby obtain granules each having a grain diameter of 1 mm or less. After these granules were subjected to heat treatment at 90 °C for 15 hours, 0.4 parts by weight of magnesium stearate was added to the granules, which were then molded by a rotary tableting machine to form a pellet having a diameter of 3.2 mm and a thickness of 1.5 mm. The obtained pellet was then subjected to heat treatment at 110 °C for 10 hours, thereby producing gas generating agent 62. The total amount of granular gas generating agents 62 filled in the working gas generation chamber was set such that the total amount of the working gas to be produced was 0.2 mol and the weight thereof was 6.57 g.

In contrast, as shown in Fig. 6, a cylinder-shaped gas generator 1X according to the comparative example has a structure shown in the above-described first embodiment of the present invention excluding bottom portion 53 of dividing member 50. Cylinder-shaped gas generator 1X according to the comparative example is configured to have bottom portion 53 of dividing member 50 shaped in a flat plate such that bottom portion 53 has a planar outer surface. In addition, cylinder-shaped gas generator 1X according to the comparative example is also configured such that pressure sensor SE is attached at the prescribed position of first housing member 10 in order to allow measurement of the internal pressure in the working gas generation chamber during actuation. The type and the attachment structure of pressure sensor SE is the same as those of cylinder-shaped gas generator 1A according to the example as described above.

In cylinder-shaped gas generator 1X according to the comparative example, a molded product obtained by performing a process for closing one of axial ends of an electric resistance welded tube typified by STKM was used as first housing member 10. Cylinder-shaped gas generator 1X has an axial length of 83 mm. First housing member 10 has an axial length of 78 mm and an outer diameter R1 of φ 20mm. The working gas generation chamber has a diameter R2 of φ 16mm and an axial length of 40 mm. Bottom portion 53 of dividing member 50 has a shape of a flat plate but not have a tapered shape as in cylinder-shaped gas generator 1A according the example as described above. Furthermore, distance L2 from the end of bottom portion 53 of dividing member 50 on the igniter 30 side to the end of the working gas generation chamber on the igniter 30 side is 7 mm. Furthermore, second cushion member 64 has a thickness of 1.4 mm. Dividing member 50 has an axial length of 31.6 mm while hollow portion 55 has a diameter R3 of φ 6mm. A total of 24 first communication holes 54 are provided in circular cylindrical portion 52 of dividing member 50, in which four first communication holes are provided per row in the circumferential direction of circular cylindrical portion 52, and six rows of the holes are arranged with 4.4 mm pitches in the axial direction of circular cylindrical portion 52. It is to be noted that each first communication hole 54 is a circular hole of φ 2 mm.

In this case, gas generating agents 62 filled in the working gas generation chamber were similar to those used in cylinder-shaped gas generator 1A according to the above-described example. In addition, as in the case of cylinder-shaped gas generator 1A according to the above-described example, the total amount of gas generating agents 62 was also set such that the total amount of the working gas to be produced was 0.2 mol and the weight thereof was 6.57 g.

In the verification test, a plurality of samples each having the above-described configuration were prepared. These samples were placed within their respective tanks airtightly enclosed and each having a prescribed capacity. Then, the samples were actuated, during which the tank pressure and the internal pressure in the working gas generation chamber were measured over time, to thereby evaluate the performance of each sample. Thus, based on the evaluation results, the extent of the variations among the samples was checked. It is to be noted that the capacity of each tank that was used was 1 cubic feet (about 28.3 liters). The ambient temperature within the tank was set under the low temperature environment (about -40°C), under the room temperature environment (about 23 °C) and under the high temperature environment (about 85 °C). Then, after it was confirmed that the temperature of each sample conformed to the ambient temperature, each sample was actuated.

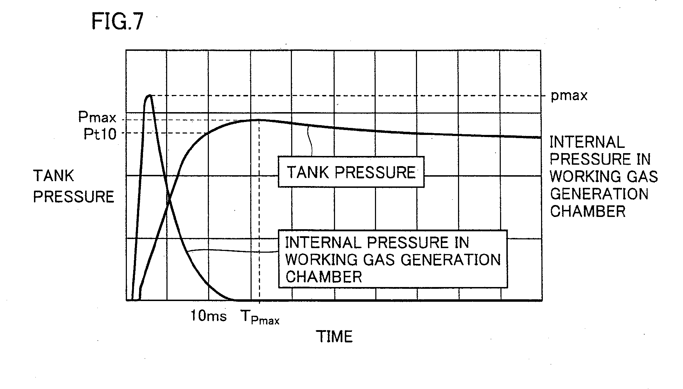

Fig. 7 is a graph for illustrating various parameters measured in the verification test. Referring to Fig. 7, the measured various parameters will be hereinafter described. It is to be noted that, in the graph shown in Fig. 7, time is plotted along the horizontal axis and the tank pressure and the internal pressure in the working gas generation chamber (hereinafter also merely referred to as an "internal pressure") are plotted along the vertical axis.

The measured parameters represent four parameters including tank pressure Pt10 at the time after a lapse of 10 ms from the start of actuation, maximum value Pmax of the tank pressure, time T_{Pmax} required for the tank pressure to reach the maximum value (each sample number n= 8), and maximum value pmax of the internal pressure in the working gas generation chamber (each sample number n= 7). In this case, Pt10 and T_{Pmax} as described above each are an index used for evaluating the inflation velocity of the air bag in the air bag apparatus having the cylinder-shaped gas generator incorporated therein. Pmax is an index used for evaluating the cushioning performance after inflation of the air bag. Furthermore, pmax as described above is an index used for evaluating the combustion characteristics of the gas generating agents in the cylinder-shaped gas generator. It is to be noted that each of these four parameters is essential for evaluating the performance of the cylinder-shaped gas generator, and each parameter not only has a desired value but also ideally shows no variations among the products.

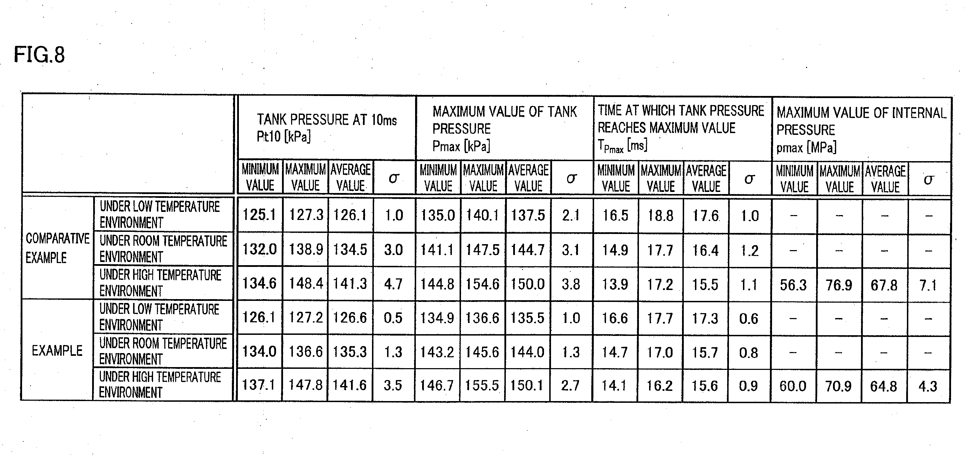

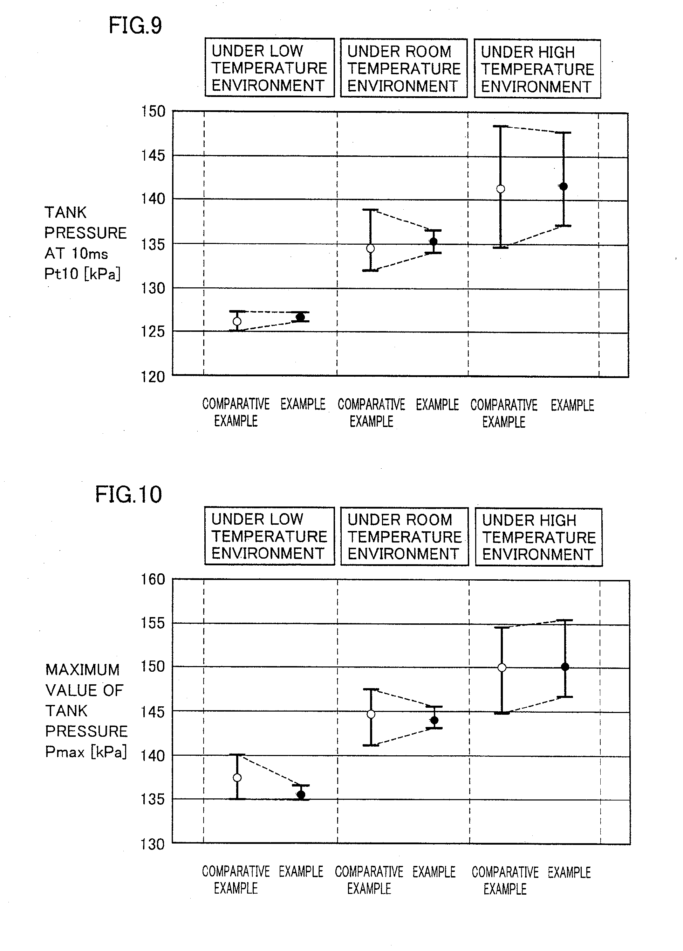

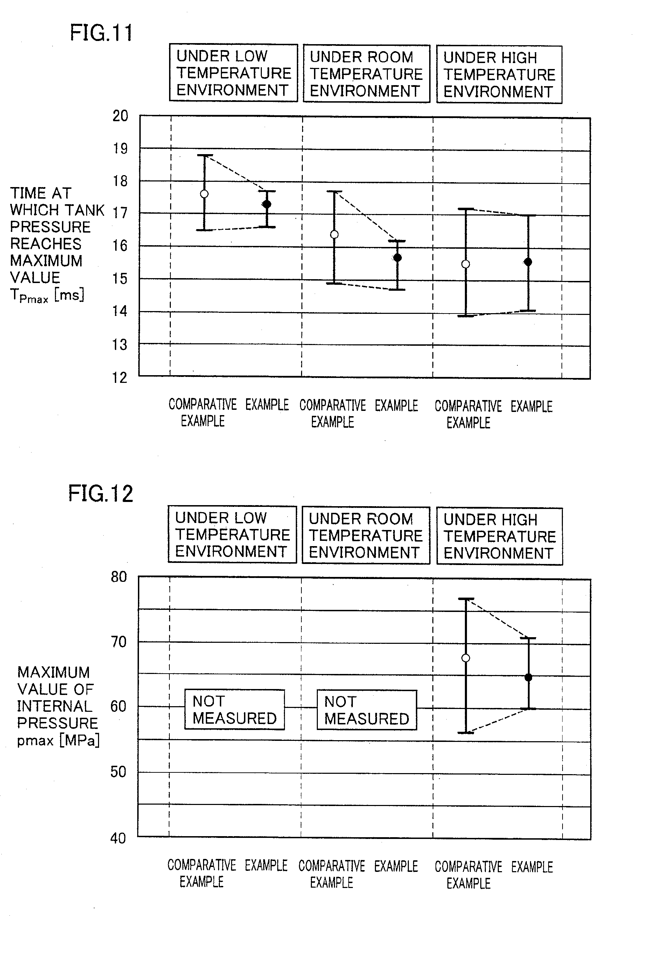

Fig. 8 shows a table illustrating the test results of the verification test. Figs. 9 to 12 each show a graph illustrating the results of the verification test. In this case, Fig. 9 shows variations in Pt10 among the samples of the cylinder-shaped gas generator according to each of the example and the comparative example. Fig. 10 shows variations in Pmax among the samples of the cylinder-shaped gas generator according to each of the comparative example and the example. Fig. 11 shows variations in T_{Pmax} among the samples in the cylinder-shaped gas generator according to each of the comparative example and the example. Fig. 12 shows variations in pmax among the samples in the cylinder-shaped gas generator according to each of the comparative example and the example.

As seen from these Figs. 8 to 12, as compared to cylinder-shaped gas generator 1X according to the comparative example, cylinder-shaped gas generator 1A according to the example shows that the variations in each of Pt10, Pmax, T_{Pmax}. and pmax among the samples are suppressed under each of the low temperature environment, the room temperature environment and the high temperature environment. Particularly, under the low temperature environment and the room temperature environment, cylinder-shaped gas generator 1A according to the embodiment shows that the range of the variations in each of Pt10, Pmax and T_{Pmax} among the samples was decreased approximately to 1/2 to 1/3 as compared to the case of cylinder-shaped gas generator 1X according to the comparative example. Consequently, each standard deviation σ also shows a relatively small value. Therefore, based on the test results of the verification test described above, it was experimentally confirmed that the present invention was employed to allow implementation of a cylinder-shaped gas generator reduced in size and weight and providing desired output characteristics with stability.

### [Second Embodiment]

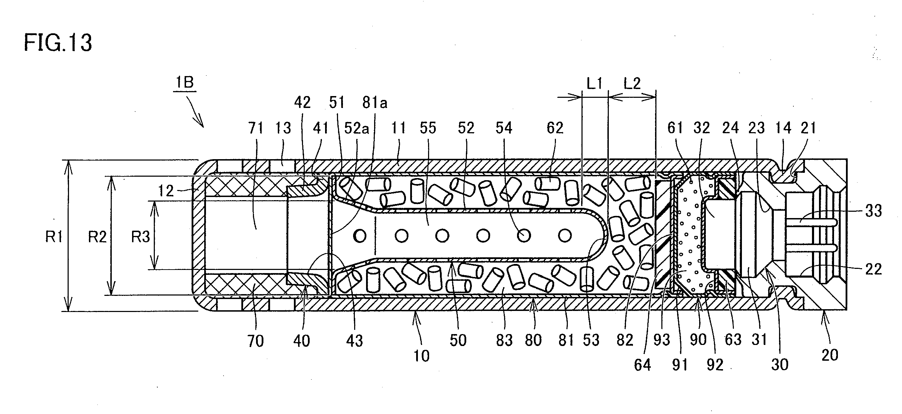

Fig. 13 is a schematic cross-sectional view of the cylinder-shaped gas generator in the second embodiment of the present invention. Referring to Fig. 13, the cylinder-shaped gas generator in the present embodiment will be hereinafter described. In addition, the same components as those of the cylinder-shaped gas generator in the first embodiment of the present invention as described above are designated by the same reference characters, and description thereof will not be repeated.

In the cylinder-shaped gas generator, the flow rate of the working gas discharged from the gas discharge opening and the internal pressure in the working gas generation chamber that should be kept for maintaining combustion of the gas generating agents are basically determined based on the amount of the working gas produced in the working gas generation chamber and the cross-sectional area of the channel through which the working gas flows. Thus, the flow rate of the working gas and the internal pressure in the working gas generation chamber are restricted in the region in the channel of the working gas having the smallest cross-sectional area. Accordingly, when determining the performance of the cylinder-shaped gas generator, it is an important factor to define the size of the cross-sectional area of the channel of the working gas. Generally, in the cylinder-shaped gas generator, the second communication hole provided in the partition member partitioning the working gas generation chamber and the filter chamber is defined to be located in the region having the smallest cross-sectional area in the channel of the working gas while the size of the opening area of the second communication hole is adjusted, thereby adjusting the flow rate of the working gas discharged through the gas discharge opening. It is preferable that the second communication hole is defined to have a diameter similar to the inner diameter of the partition member.

In cylinder-shaped gas generator 1A in the first embodiment of the present invention as described above, the cylindrical portion of dividing member 50 is formed only of circular cylindrical portion 52 having a circular cylindrical shape which extends in the shape of a straight tube and has an inner diameter and an outer diameter that are constant in the axial direction of the housing. In addition, the cylindrical portion of dividing member 50 is configured such that the shape of the opening of the end on the partition member 40 side (that is, the shape of the end of hollow portion 55) approximately conforms to the shape of the opening of second communication hole 43 provided in partition member 40. In this case, when the flow rate of the working gas discharged from gas discharge opening 13 is changed while maintaining the amount of gas generating agents 62 to be filled, and when the internal pressure in the working gas generation chamber during actuation is changed while maintaining the amount of gas generating agents 62 to be filled, it is necessary to adjust the size of the opening area of second communication hole 43 provided in partition member 40 while maintaining the shape of the cylindrical portion of dividing member 50.

However, when the opening area of second communication hole 43 provided in partition member 40 is enlarged while maintaining the shape of the cylindrical portion of dividing member 50, the region having the smallest cross-sectional area in the channel of the working gas is located not at second communication hole 43 but at the end of dividing member 50 on the partition member 40 side. This may cause a problem that intended modification cannot be achieved.

Therefore, in cylinder-shaped gas generator 1B according to the present embodiment, the shape of dividing member 50 is slightly modified while the opening area of second communication hole 43 provided in partition member 40 is enlarged, to thereby solve the above-described problems. In other words, as shown in Fig. 13, cylinder-shaped gas generator 1B in the present embodiment is configured such that the cylindrical portion of dividing member 50 has circular cylindrical portion 52 in the shape of a circular cylinder extending in the shape of a straight tube and having an inner diameter and an outer diameter that are constant in the axial direction of the housing; and a diameter increasing portion 52a continuously extending from the end of circular cylindrical portion 52 on the partition member 40 side and gradually increasing in diameter in accordance with a decrease in the distance from partition member 40, in which the opening shape of the end of diameter increasing portion 52a on the partition member 40 side (that is, the shape of the end of hollow portion 55) approximately conforms to the opening shape of second communication hole 43 provided in partition member 40. In addition, also when diameter increasing portion 52a is provided in dividing member 50 as in the present embodiment, it is preferable that the axial length of diameter increasing portion 52a is 5% or more and 20% or less of the axial length of dividing member 50.

The configuration as described above only needs a slight modification of the design required when the flow rate of the working gas discharged from gas discharge opening 13 is changed while maintaining the amount of gas generating agents 62 to be filled, when the internal pressure in the working gas generation chamber during actuation is changed while maintaining the amount of gas generating agents 62 to be filled, and the like. Consequently, a cylinder-shaped gas generator can be provided that is capable of accommodating any specifications more easily as compared with the conventional case.

Although description has been made in the present embodiment with regard to the configuration in which the shape of the opening at the end of diameter increasing portion 52a provided in dividing member 50 on the partition member 40 side approximately conforms to the shape of the opening of second communication hole 43 provided in partition member 40, the present embodiment may be configured such that the opening diameter of second communication hole 43 is smaller than the opening diameter at the end of diameter increasing portion 52a on the partition member 40 side. In this case, the position in which second communication hole 43 is provided corresponds to the region having the smallest cross-sectional area on the channel of the working gas, with the result that partition member 40 functions as a pressure bulkhead.

### [Third Embodiment]

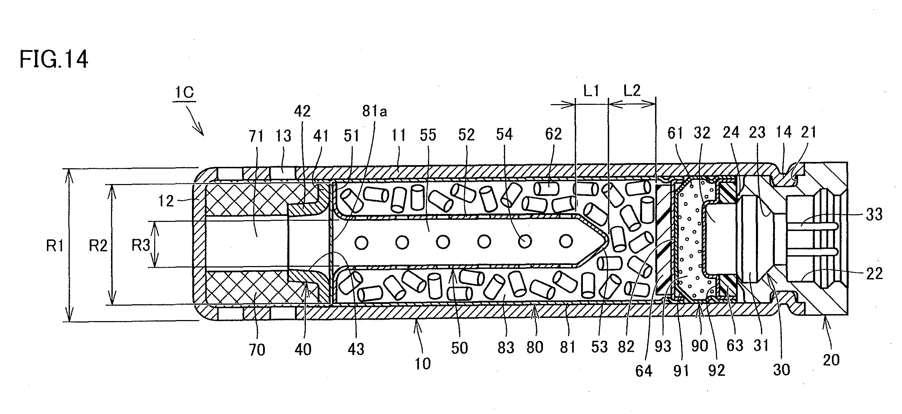

Fig. 14 is a schematic cross-sectional view of the cylinder-shaped gas generator in the third embodiment of the present invention. Referring to Fig. 14, the cylinder-shaped gas generator in the present embodiment will be hereinafter described. In addition, the same components as those of the cylinder-shaped gas generator in the first embodiment of the present invention as described above are designated by the same reference characters, and description thereof will not be repeated.

In cylinder-shaped gas generator 1A in the first embodiment of the present invention as described above, bottom portion 53 of dividing member 50 is configured such that the outer surface of bottom portion 53 has a hemispherical shape. In contrast, in a cylinder-shaped gas generator 1C in the present embodiment, bottom portion 53 of dividing member 50 is configured to have an outer surface of an approximately conical shape such that bottom portion 53 has a tapered shape to provide an outer shape which is gradually reduced in size in accordance with a decrease in the distance from igniter 30.

Also in the configuration as described above, the same effects as those in the case of cylinder-shaped gas generator 1A in the first embodiment of the present invention as described above can be achieved. Thus, a cylinder-shaped gas generator reduced in size and weight and providing desired output characteristics with stability can be provided. In addition, when the configuration as in the present embodiment is employed, in order to prevent gas generating agents 62 from being brought into contact with the end portion of bottom portion 53 of dividing member 50 and being crushed during filling with gas generating agents 62, it is preferable that the end portion of bottom portion 53 is not sharpened (for example, shaped in an extremely small curved surface or a flat surface).

### [Fourth Embodiment]

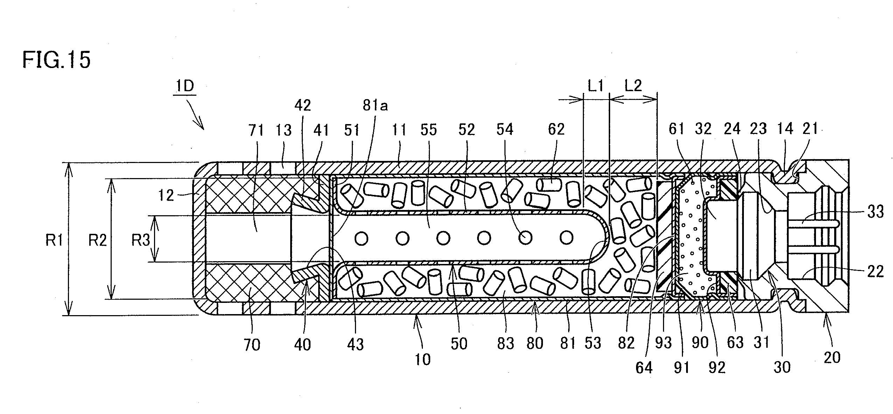

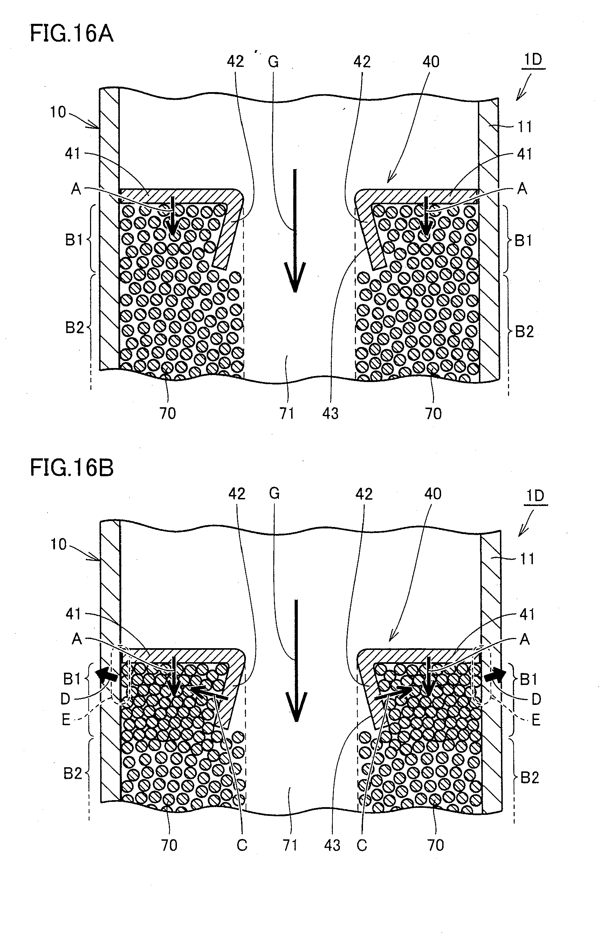

Fig. 15 is a schematic cross-sectional view showing the cylinder-shaped gas generator according to the fourth embodiment of the present invention. Figs. 16A and 16B each are a main-part enlarged cross-sectional view showing an enlarged portion in the vicinity where the partition member of the cylinder-shaped gas generator in the present embodiment is provided. Fig. 16A is a diagram showing the state immediately after the start of actuation of the cylinder-shaped gas generator. Fig. 16B is a diagram showing the state after a lapse of a prescribed time period from the start of actuation. In Figs. 16A and 16B, the flow direction of the working gas is indicated by an arrow G. Referring to Figs. 15, 16A and 16B, the cylinder-shaped gas generator in the present embodiment will be hereinafter described. In addition, the same components as those of the cylinder-shaped gas generator in the first embodiment of the present invention as described above are designated by the same reference characters, and description thereof will not be repeated.

As shown in Fig. 15, in a cylinder-shaped gas generator 1D according to the present embodiment, cylindrical protruding portion 42 of partition member 40 partitioning the working gas generation chamber and the filter chamber is configured to have a conical plate shape that is gradually increased in diameter such that the opening area of second communication hole 43 defined by cylindrical protruding portion 42 is increased in accordance with an increase in the distance from annular plate portion 41 (in accordance with an increase in the distance from the working gas generation chamber and with a decrease in the distance from the end of cylindrical protruding portion 42). Also, partition member 40 is fit or loosely fit into the housing. Therefore, first housing member 10 is not subjected to the caulking process for fixing partition member 40. Accordingly, also in cylinder-shaped gas generator 1D in the present embodiment, similarly to the case where cylinder-shaped gas generator 1A in the first embodiment of the present invention described above is employed, the assembly can be carried out easily as compared with the conventional case. The following is a reason why partition member 40 can sufficiently perform its function even when the above-described installation structure is employed.

As shown in Fig. 16A, immediately after the start of actuation of cylinder-shaped gas generator 1D, when receiving the thrust force of the working gas of high temperature and high pressure produced in the working gas generation chamber (that is, the pressure produced in accordance with an increase in the internal pressure in the working gas generation chamber), annular plate portion 41 of partition member 40 receives the force in the axial direction of the housing toward filter 70 (the force indicated by an arrow A in the figure). Consequently, annular plate portion 41 of partition member 40 starts to move toward filter 70. This movement of annular plate portion 41 causes compression, in the axial direction of the housing, of the portion of filter 70 surrounded by partition member 40 and the housing (that is, the portion in the vicinity of the end of filter 70 on the working gas generation chamber side, that is, the portion included in region B1 shown in the figure).

Thus, filter 70 is provided with a gap therewithin that is formed by winding a metal wire material or a mesh material having a metal wire material interwoven therewith, or by compressing the same by presswork. In this case, as shown in Fig. 16B, the volume of the gap is decreased in accordance with the above-described movement of annular plate portion 41. In addition, while the metal wire material is further densely filled in region B1, it tends to expand in the radial direction of the housing, thereby generating a force to cause cylindrical protruding portion 42 of partition member 40 to be squeezed inwardly in the radial direction of the housing. However, cylindrical protruding portion 42 of partition member 40 is applied with a force approximately in the radial direction of the housing toward the outside in accordance with an increase in the internal pressure as described above (the force indicated by arrow C shown in the figure). Accordingly, this force overwhelms the force causing cylindrical protruding portion 42 of partition member 40 to be squeezed inwardly in the radial direction of the housing. In addition, its reaction force (the force indicated by arrow D in the figure) is to be added to the contact portion between the housing and filter 70 (region E shown in the figure). This causes a frictional force to be generated in the contact portion between the housing and filter 70. This frictional force then serves as a brake force for suppressing further movement of partition member 40 toward filter 70.

In this case, the reaction force (the force indicated by arrow D in the figure) serves to act in the direction orthogonal to the radial direction and the axial direction of the housing. Accordingly, the reaction force is to act as a high brake force that prevents movement of partition member 40 in a wide range of the housing, so that this brake force can serve to suppress the amount of movement of partition member 40 to be small. Consequently, filter 70 is to be reliably protected by partition member 40, so that breakage of filter 70 can be prevented. Furthermore, since the outer edge of partition member 40 is pressed into contact with the inner circumferential surface of the housing, it becomes possible to reliably prevent the phenomenon that the working gas is discharged through the above-described contact portion from gas discharge opening 13 to the outside of the housing without passing through filter 70, that is, a so-called bypass phenomenon.

Furthermore, in cylinder-shaped gas generator 1B in the present embodiment, cylindrical protruding portion 42 of partition member 40 is configured so as to cover only the area in the vicinity of the end of filter 70 on the working gas generation chamber side. Accordingly, the internal area of filter 70 corresponding to the portion located in region B2 shown in Fig. 16B is maintained in the state where a sufficient gap is provided. Accordingly, the working gas can smoothly flow in this portion without influence of movement and deformation of partition member 40 as described above. Therefore, the functions of filter 70 to cool the working gas and to collect slag are not impaired.

Furthermore, cylinder-shaped gas generator 1B in the present embodiment is configured such that, when partition member 40 and filter 70 are projected in the axial direction of the housing onto the plane orthogonal to this axis, the inner edge of the region onto which filter 70 is projected is located outside of the inner edge of the region onto which partition member 40 is projected. In other words, as seen from the working gas generation chamber in plan view of partition member 40 and filter 70, the relative positional relationship between partition member 40 and filter 70 is adjusted such that filter 70 is completely covered by partition member 40. The above-described configuration causes the working gas of high temperature and high pressure having passed through second communication hole 43 of partition member 40 to flow along the inner circumferential surface of filter 70. Consequently, the rate of spraying the working gas directly onto filter 70 can be significantly decreased.

In addition, in cylinder-shaped gas generator 1B in the present embodiment, partition member 40 is held by a portion of filter 70 located in the above-described region B1 during actuation. This eliminates the need to design partition member 40 such that the thrust force of the working gas can be resisted only by partition member 40, thereby allowing the thickness to be decreased as compared with the conventional case. Specifically, in consideration of the specifications of a commonly-used cylinder-shaped gas generator, when a steel material is used as partition member 40, it is sufficient to design the steel material to have a thickness of approximately 0.7 mm or more.

Cylinder-shaped gas generator 1D in the present embodiment as described above can achieve the same effects as those achieved by cylinder-shaped gas generator 1A in the first embodiment of the present invention as described above.

Furthermore, cylinder-shaped gas generator 1D in the present embodiment is configured such that, when partition member 40 and filter 70 are projected in the axial direction of the housing onto the plane orthogonal to this axis, the inner edge of the region onto which filter 70 is projected is aligned with the inner edge of the region onto which partition member 40 is projected. This configuration allows the function of filter 70 to be maximized.

Furthermore, in cylinder-shaped gas generator 1D in the present embodiment, since cylindrical protruding portion 42 of partition member 40 is configured to have a conical plate shape that is gradually increased in diameter in accordance with an increase in the distance from annular plate portion 41. Accordingly, when cylinder-shaped gas generator 1D is assembled, filter 70 and partition member 40 can be integrated with each other in advance. This configuration allows reduction in the number of the parts to be installed during installation. Thus, the number of installation processes can be decreased to thereby allow a reduction in the manufacturing cost.

### [Fifth Embodiment]

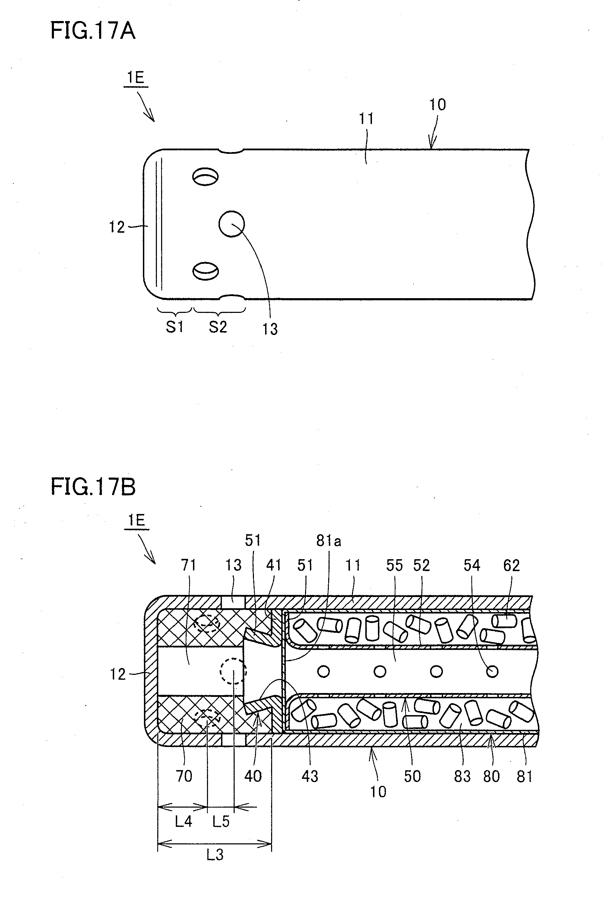

Fig. 17A is a main-part enlarged front view showing an enlarged area in the vicinity where a gas discharge opening of a cylinder-shaped gas generator in the fifth embodiment of the present invention is provided. Also, Fig. 17B is a main-part enlarged cross-sectional view showing an enlarged area in the vicinity where a gas discharge opening of the cylinder-shaped gas generator in the present embodiment is provided. Referring to Figs. 17A and 17B, the configuration of the cylinder-shaped gas generator in the present embodiment will be hereinafter described. It is to be noted that the components identical to those of the cylinder-shaped gas generator in the above-described fourth embodiment of the present invention are designated by the same reference characters, and description thereof will not be repeated.

As shown in Figs. 17A and 17B, in a cylinder-shaped gas generator 1E in the present embodiment, a plurality of gas discharge openings 13 are provided in an area of circumferential wall portion 11 of first housing member 10 located to face the outer circumferential surface of filter 70 housed in the filter chamber (that is, an area of circumferential wall portion 11 of first housing member 10 defining the filter chamber). This area of circumferential wall portion 11 of first housing member 10 defining the filter chamber includes a gas discharge opening unformed region S1 having no gas discharge opening 13 formed therein and a gas discharge opening formed region S2 having gas discharge opening 13 formed therein. Gas discharge opening formed region S2 is provided with two rows of the gas discharge openings. In this case, these rows of the openings are arranged at regular intervals in the staggered manner in the axial direction and each include a plurality of gas discharge openings 13 provided at each 90 degrees along the circumferential direction of first housing member 10.

In this case, gas discharge opening formed region S2 corresponds to the region of circumferential wall portion 11 of first housing member 10 located between the edge, on the bottom wall portion 12 side, of one of the gas discharge openings located closest to bottom wall portion 12 in the axial direction of first housing member 10 and the edge, on the working gas generation chamber side, of one of the gas discharge openings located closest to the working gas generation chamber in the axial direction of first housing member 10. Gas discharge opening unformed region S1 corresponds to the region of circumferential wall portion 11 of first housing member 10 that is located on the bottom wall portion 12 side in the region excluding the above-described gas discharge opening formed region S2. Accordingly, gas discharge opening unformed region S1 is located in the area of circumferential wall portion 11 of first housing member 10 corresponding to the area of filter 70 located closer to the axial end face and including the axial end face brought into contact with bottom wall portion 12. Gas discharge opening formed region S2 is located in the area of circumferential wall portion 11 of first housing member 10 located closer to the working gas generation chamber than gas discharge opening unformed region S1.

A cylinder-shaped gas generator 1E according to the present embodiment is configured such that the middle position in the axial direction of gas discharge opening formed region S2 in the axial direction of first housing member 10 is located on the working gas generation chamber side so as to be displaced by a prescribed distance with respect to the middle position in the axial direction of filter 70. In other words, the middle position in gas discharge opening formed region S2 in the axial direction of first housing member 10 is not aligned with the middle position in the axial direction of filter 70, but displaced toward the working gas generation chamber. This causes the plurality of gas discharge openings 13 provided in first housing member 10 to be distributed in the region closer to the working gas generation chamber in the positional relationship relative to filter 70.

According to the configuration as described above, as compared with the case where the middle position in gas discharge opening formed region S2 in the axial direction of first housing member 10 is aligned with the middle position in the axial direction of filter 70, the gas produced within the housing at the time of actuation of cylinder-shaped gas generator 1E can be effectively cooled with high cooling efficiency while the amount of the slag to be discharged through gas discharge opening 13 can be decreased. The mechanism will be hereinafter described in detail.

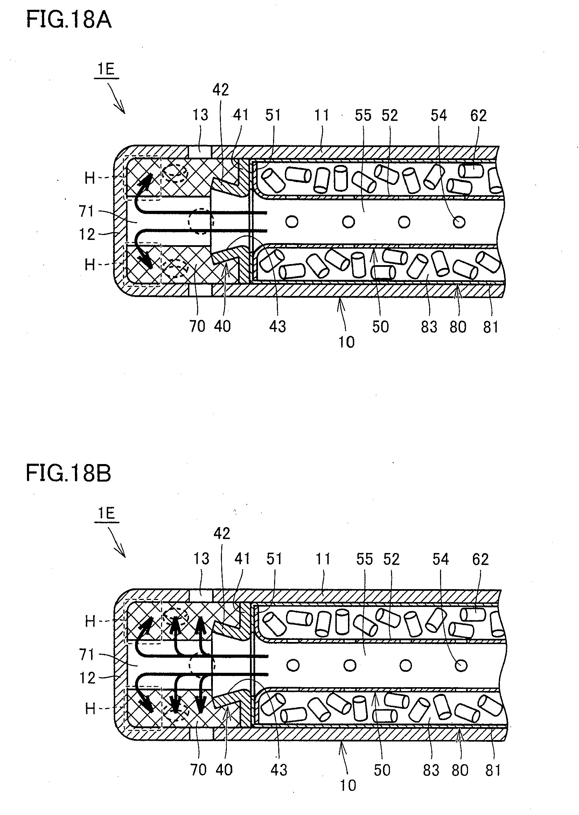

Fig. 18A is a diagram schematically showing the flowing state of the gas in the early stage during actuation of the cylinder-shaped gas generator in the present embodiment. Fig. 18B is a diagram schematically showing the flowing state of the gas after a lapse of a prescribed time period from the start of actuation of the cylinder-shaped gas generator in the present embodiment.

As shown in Fig. 18A, in the early stage during actuation of cylinder-shaped gas generator 1E, as indicated by an arrow in the figure, the gas of high pressure and high temperature produced in the working gas generation chamber flows through second communication hole 43 of partition member 40 into hollow communication portion 71 of filter 70. In this case, most of the gas linearly flows through hollow communication portion 71 of filter 70 from the end on the working gas generation chamber side toward the end on the bottom wall portion 12 side. Then, the gas flowing through hollow communication portion 71 of filter 70 and having reached the end on the bottom wall portion 12 side is sprayed toward the main surface of bottom wall portion 12 and then turns in a different direction to flow into an end region H of filter 70 on the bottom wall portion 12 side.

In this case, the gas generated in the early stage during actuation of cylinder-shaped gas generator 1E tends to contain a particularly large amount of slag. Accordingly, most of the slag generated in this early stage during actuation is sprayed onto the main surface of bottom wall portion 12 along with the flow of the gas in the early stage of actuation as described above, bounced off the main surface of bottom wall portion 12 and then collected in end region H of filter 70 on the bottom wall portion 12 side. Consequently, in the early stage during the actuation of cylinder-shaped gas generator 1E, a particularly large amount of slag is to be accumulated in end region H of filter 70 on the bottom wall portion 12 side.

Then, when a prescribed time period has passed since the start of actuation of cylinder-shaped gas generator 1E and then the pressure balancing in the filter chamber is stabilized, as shown in Fig. 18B, the gas flowing from the working gas generation chamber into the filter chamber mostly flows into filter 70 before it reaches the end of hollow communication portion 71 of filter 70 on the bottom wall portion 12 side. The amount of the slag contained in the gas generated after a lapse of the prescribed time period since the start of actuation of cylinder-shaped gas generator 1E is significantly smaller than the amount of the slag contained in the gas generated in the early stage of the above-described actuation. Accordingly, in the state where the pressure balancing within the filter chamber is stabilized after a lapse of the prescribed time period since the start of actuation, the slag may be effectively colleted from throughout filter 70.

In the case where the middle position in the gas discharge opening formed region in the axial direction of the first housing member is aligned with the middle position in the axial direction of the filter, the gas discharge openings are evenly arranged in the axial direction of the first housing member with respect to the middle position in the axial direction of the filter. Accordingly, even after a lapse of the prescribed time period since the start of actuation of the cylinder-shaped gas generator, the increased amount of the gas is to pass through the end region of the filter on the bottom wall portion side. Therefore, there is a high possibility that the slag already collected in the above-described end region of the filter in the early stage of actuation of the cylinder-shaped gas generator is pushed out by the flow of the gas to the outside of the filter. In addition, the slag is likely to be discharged through the gas discharge opening to the outside of the housing.

In contrast, in cylinder-shaped gas generator 1E according to the present embodiment, the plurality of gas discharge openings 13 provided in first housing member 10 as described above are distributed in the area closer to the working gas generation chamber in the positional relationship relative to filter 70. Accordingly, after a lapse of the prescribed time period since the start of actuation of cylinder-shaped gas generator 1E, the amount of the gas passing through end region H of filter 70 on the bottom wall portion 12 side is decreased, which allows suppression of outflow of the slag to the outside of filter 70 as described above. Consequently, the configuration as described above allows a decrease in the amount of the slag discharged through gas discharge openings 13 during actuation of cylinder-shaped gas generator 1E.

Furthermore, after a lapse of the prescribed time period since the start of actuation of cylinder-shaped gas generator 1E, as described above, the gas flowing from the working gas generation chamber into the filter chamber mostly flows into filter 70 before it reaches the end of hollow communication portion 71 of filter 70 on the bottom wall portion 12 side. This causes the gas to flow through filter 70 more uniformly in the axial direction of filter 70, thereby leading to an increase in the effective volume of filter 70 as compared with the case where the middle position in the gas discharge opening formed region in the axial direction of the first housing member is aligned with the middle position in the axial direction of the filter. Consequently, the gas can be efficiently cooled by filter 70.

Therefore, according to cylinder-shaped gas generator 1E as in the present embodiment, the working gas produced within gas generator 1E can be efficiently cooled with high cooling efficiency while the amount of the slag discharged through gas discharge openings 13 can be decreased.

In addition, in cylinder-shaped gas generator 1E according to the present embodiment, a plurality of gas discharge openings 13 are provided in a displaced manner in the axial direction of first housing member 10, which can prevent shortage of the opening area for providing gas discharge openings 13. Therefore, the gas generated within the housing can also be efficiently discharged to the outside of the housing.

In addition, the specific arrangement of gas discharge openings 13 is optimized based on various specifications, an example of which will be hereinafter described. Referring to Fig. 17B, for example, when filter 70 has an axial length L3 of 15.0 mm, four gas discharge openings 13 each having a diameter of 3.5 mm are arranged in a line at each 90 degrees in the circumferential direction and each are provided in the position where a distance L4 in the axial direction from bottom wall portion 12 is 6.5 mm. In addition, four gas discharge openings 13 each having a diameter of 3.5 mm are arranged in a line at each 90 degrees in the circumferential direction and each are provided in the position where a distance L5 in the axial direction further from the position described above with regard to distance L4 is 3.5 mm. In this case, gas discharge openings 13 provided in each row are located displaced by 45 degrees in the circumferential direction, so that the openings are arranged in a staggered manner.

In the case where gas discharge openings 13 are arranged in this way, the axial length of gas discharge opening unformed region S1 shown in Fig. 17A is 4.75 mm while the axial length of gas discharge opening formed region S2 also shown in Fig. 17A is 7.0 mm. In addition, the middle position in the axial direction of filter 70 is located at a distance of 7.5 mm in the axial direction from bottom wall portion 12 while the middle position in the axial direction of gas discharge opening formed region S2 is located at a distance of 8.25 mm in the axial direction from bottom wall portion 12. Therefore, the configuration as described above allows a plurality of gas discharge openings 13 provided in first housing member 10 to be distributed in the area closer to the working gas generation chamber in the positional relationship relative to filter 70.

In the first to fifth embodiments of the present invention described above, description has been made mainly by illustrating the case where first housing member 10 is formed of a press-molded product obtained by press-molding a rolled steel plate or a molded product obtained by performing a process for closing one of axial ends of an electric resistance welded tube. Instead, first housing member 10 may be formed by a seamless pipe formed by protrusion molding. Also in the case where first housing member 10 is formed by such a seamless pipe, the above-described effects can be achieved.

Furthermore, in the first to fifth embodiments of the present invention described above, although description has been made by illustrating the case where a nichrome wire and the like serving as a resistor is used for igniter 30 as a heat source, it is also possible to use an igniter employing a so-called semiconductor bridge as a heat source. When applying the igniter employing a semiconductor bridge as a heat source, a cylinder-shaped gas generator allowing gas output to be achieved more promptly during actuation can be provided.

Furthermore, in the first to fifth embodiments of the present invention described above, although description has been made by illustrating the cylinder-shaped gas generator in which gas generating agents 62 and enhancer agents 61 are stored in first airtight container 80 and second airtight container 90, respectively, the cylinder-shaped gas generator does not necessarily need to be configured in this way, but may be configured such that gas generating agents 62 and enhancer agents 61 are directly filled in the housing consisting of first housing member 10 and second housing member 20. In this case, however, it is necessary to separately perform an airtightly-sealing process at a prescribed site of the housing for preventing gas generating agents 62 and enhancer agents 61 from absorbing moisture.

Furthermore, in the first to fifth embodiments of the present invention as described above, description has been made by illustrating the cylinder-shaped gas generator in which enhancer agents 61 are contained in order to promote combustion of gas generating agents 62. However, enhancer agents 61 are not necessarily provided. For example, packing of enhancer agents 61 can be eliminated by improvement of the sensitivity of gas generating agents 62 for starting combustion, and the like. Also in the case of the configuration in which enhancer agents 61 are packed in the cylinder-shaped gas generator, enhancer agents 61 can also be installed integrally with igniter 30.

Furthermore, in the first to fifth embodiments of the present invention described above, although description has been made by illustrating the cylinder-shaped gas generator in which first housing member 10 and second housing member 20 are coupled to each other by caulking fixation, it is also possible to use welding for fixing first housing member 10 and second housing member 20.

Furthermore, in the first to fifth embodiments of the present invention described above, although description has been made by illustrating the case where cylindrical protruding portion 42 of partition member 40 is formed to have a conical plate shape, the shape of cylindrical protruding portion 42 is not limited thereto, but may be formed to have a curved cross section, for example. In any case, cylindrical protruding portion 42 only needs to be configured to have a shape that allows the force applied to cylindrical protruding portion 42 in accordance with an increase in the internal pressure to be exerted in the direction orthogonal to each of the radial direction and the axial direction of the housing. It is also preferable that the inner circumferential surface of cylindrical protruding portion 42 is not disposed in parallel to the axial direction of the housing.

In addition, in the first to fifth embodiments of the present invention as described above, description has been made by illustrating the case where the present invention is applied to the cylinder-shaped gas generator incorporated in the side air bag apparatus. However, the subject to which the present invention is applied is not limited thereto, but the present invention may also be applied to a cylinder-shaped gas generator incorporated in an air bag apparatus for passenger seat, a curtain air bag apparatus, a knee airbag apparatus and the like or to a so-called T-shaped gas generator having an elongated gas output unit as in the cylinder-shaped gas generator.

It is to be noted that the characteristic configuration of the cylinder-shaped gas generator in each of the first to fifth embodiments of the present invention as described above can be reasonably combined with one another in the range acceptable in terms of the apparatus configuration.

Embodiments disclosed herein are illustrative and non-restrictive in every respect. The technical scope of the present invention is defined by the terms of the claims, and is intended to include any modifications within the scope and meaning equivalent to the terms of the claims.

### REFERENCE SIGNS LIST

1A to 1E, 1X cylinder-shaped gas generator, 10 first housing member, 11 circumferential wall portion, 12 bottom wall portion, 13 gas discharge opening, 14 caulking portion, 20 second housing member, 21 groove, 22 recess, 23 through portion, 24 caulking portion, 30 igniter, 31 base portion, 32 ignition portion, 33 terminal pin, 40 partition member, 41 annular plate portion, 42 cylindrical protruding portion, 43 second communication hole, 50 dividing member, 51 flange portion, 52 circular cylindrical portion, 52a diameter increasing portion, 53 bottom portion, 54 first communication hole, 55 hollow portion, 61 enhancer agent, 62 gas generating agent, 63 first cushion member, 64 second cushion member, 70 filter, 71 hollow communication portion, 80 first airtight container, 81 cup portion, 81 a axial end, 82 cap portion, 83 storage space, 90 second airtight container, 91 cup portion, 92 cap portion, 93 storage space, MP sensor installation port, SE pressure sensor.

## Claims

1. A gas generator comprising:
a housing having an elongated and circular cylindrical shape closed at each end in an axial direction, and including a working gas generation chamber in which a gas generating agent (62) is burned to produce working gas, and a filter chamber housing a filter (70) through which the working gas produced in said working gas generation chamber passes;
ignition means disposed at one end in the axial direction of said housing for generating a flame for burning said gas generating agent (62);
a partition member (40) located within said housing and partitioning a space within said housing in the axial direction into said working gas generation chamber and said filter chamber; and
a dividing member (50) located within said working gas generation chamber and dividing said working gas generation chamber,
said filter chamber being located closer to an other end in the axial direction of said housing than said working gas generation chamber,
a portion of a circumferential wall portion of said housing defining said filter chamber being provided with a plurality of gas discharge openings (13) for discharging the working gas having passed through said filter (70) to outside,
said dividing member (50) being made of a cylindrical member with a bottom having a hollow portion (55) therein and disposed coaxially with said housing, and including a cylindrical portion extending in the axial direction of said housing from an end of said partition member (40) on a side of said working gas generation chamber, and a bottom portion (53) closing an end of said cylindrical portion on a side of said ignition means,
said bottom portion (53) of said dividing member (50) being located closer to said partition member (40) than an end of said working gas generation chamber on the side of said ignition means,
said gas generating agent (62) being stored in a portion of said working gas generation chamber excluding said hollow portion (55) of said dividing member (50),
said cylindrical portion of said dividing member (50) being provided with a plurality of first communication holes (54) providing communication between a space in said working gas generation chamber storing said gas generating agent (62) and said hollow portion (55) of said dividing member (50),
said partition member (40) having a center portion provided with a second communication hole (43) for providing communication between said hollow portion (55) of said dividing member (50) and said filter chamber, and
said bottom portion (53) of said dividing member (50) having a tapered shape to provide an outer shape gradually reduced in size in accordance with a decrease in a distance from said ignition means.

2. The gas generator according to claim 1, wherein an outer surface of said bottom portion (53) of said dividing member (50) has an approximately hemispherical shape.

3. The gas generator according to claim 1, wherein an outer surface of said bottom portion (53) of said dividing member (50) has an approximately conical shape.

4. The gas generator according to claim 1, wherein
said cylindrical portion of said dividing member (50) has a circular cylindrical portion (52) having an inner diameter and an outer diameter that are constant in the axial direction of said housing, and
said plurality of first communication holes (53) are provided in said circular cylindrical portion (52) of said dividing member (50).

5. The gas generator according to claim 4, wherein said cylindrical portion of said dividing member (50) further includes a diameter increasing portion (52a) continuously extending from an end of said circular cylindrical portion (52) on a side of said partition member (40) and gradually increasing in diameter in accordance with a decrease in a distance from said partition member (40).

6. The gas generator according to claim 1, wherein
said housing includes a first housing member (10) having an elongated and circular cylindrical shape with a bottom and forming said other end and said circumferential wall portion of said housing, and a second housing member (20) closing an open end of said first housing member (10) to form said one end of said housing,
said first housing member (10) is made of a molded product obtained by performing a process for closing one of axial ends of an electric resistance welded tube,
an outer diameter R1 of said first housing member (10) satisfies a condition of 15 mm ≤ R1 ≤ 22 mm,
a distance L1 from a boundary portion between said bottom portion (53) and said cylindrical portion in said dividing member (50) to an end of said bottom portion (53) of said dividing member (50) on the side of said ignition means satisfies a condition of 1 mm ≤ L1 ≤ 7 mm,
a distance L2 from the end of said bottom portion (53) of said dividing member (50) on the side of said ignition means to the end of said working gas generation chamber on the side of said ignition means, and a diameter R2 of said working gas generation chamber satisfy a condition of 0.026 ≤ L2/R2 ≤ 0.71, and
a diameter R3 of said hollow portion (55) of said dividing member (50) and diameter R2 of said working gas generation chamber satisfy a condition of 0.28 ≤ R3/R2 ≤ 0.54.

7. The gas generator according to claim 1, wherein said gas generating agent (62) contains a guanidine-based compound as a fuel and basic copper nitrate as an oxidant.

8. The gas generator according to claim 1, further comprising:
a crush preventing member (64) for preventing said gas generating agent (62) from being crushed by vibration; and
a first airtight container (80) located within said housing and having a storage space (83) airtightly enclosed therein, wherein
said gas generating agent (62), said dividing member (50) and said crush preventing member (64) are stored in said storage space (83) of said first airtight container (80).

9. The gas generator according to claim 8, further comprising a second airtight container (90) located within said housing and having a storage space (93) airtightly enclosed therein, wherein
said ignition means includes an igniter (30) containing an ignition charge burning to generate a flame and an enhancer agent (61) for transmitting the flame generated by said igniter (30) to said gas generating agent (62), and
said enhancer agent (61) is stored in said storage space (93) of said second airtight container (90).

10. The gas generator according to claim 1, wherein
said filter (70) includes a hollow communication portion (71) extending in the axial direction of said housing,
said hollow communication portion (71) at least reaches an end face of said filter (70) on the side of said working gas generation chamber,
said partition member (40) includes an annular plate portion (41) covering said end face of said filter (70) and a cylindrical protruding portion (42) continuously extending from an inner circumferential edge of said annular plate portion (41) toward into said hollow communication portion (71) of said filter (70) to cover an inner circumferential surface of said filter (70) on a side of said end face,
said second communication hole is defined by an inner circumferential surface of said cylindrical protruding portion (42) of said partition member (40), and
said cylindrical protruding portion (42) of said partition member (40) is gradually decreased in diameter such that an opening area of said second communication hole (43) is decreased in accordance with an increase in a distance from said annular plate portion (41) of said partition member (50).

11. The gas generator according to claim 1, wherein
said filter (70) includes a hollow communication portion (71) extending in the axial direction of said housing,
said hollow communication portion (71) at least reaches an end face of said filter (70) on the side of said working gas generation chamber,
said partition member (40) includes an annular plate portion (41) covering said end face of said filter (70) and a cylindrical protruding portion (42) continuously extending from an inner circumferential edge of said annular plate portion (41) toward into said hollow communication portion (71) of said filter (70) to cover an inner circumferential surface of said filter (70) on a side of said end face,
said second communication hole is defined by an inner circumferential surface of said cylindrical protruding portion (42) of said partition member (40), and
said cylindrical protruding portion (42) of said partition member (40) is gradually increased in diameter such that an opening area of said second communication hole (43) is increased in accordance with an increase in a distance from said annular plate portion (41) of said partition member (40).

12. The gas generator according to claim 1, wherein said first housing member (10) is equal in outer diameter to said second housing member (20).
